(19) Europäisches Patentamt
European Patent Office
Office européen des brevets

(11) Veröffentlichungsnummer: **0 321 778**
**A2**

(12) # EUROPÄISCHE PATENTANMELDUNG

(21) Anmeldenummer: **88120387.1**

(22) Anmeldetag: **07.12.88**

(51) Int. Cl.4: **C09B 43/40 , C09B 44/08 , D21H 3/80 , C09B 43/00 , //C09B29/52**

(30) Priorität: **19.12.87 DE 3743235**

(43) Veröffentlichungstag der Anmeldung:
**28.06.89 Patentblatt 89/26**

(84) Benannte Vertragsstaaten:
**CH DE FR GB LI**

(71) Anmelder: **BAYER AG**
**D-5090 Leverkusen 1 Bayerwerk(DE)**

(72) Erfinder: **Franke, Günter, Dr.**
**Landrat-Trimborn-Strasse 60**
**D-5653 Leichlingen 1(DE)**
Erfinder: **Wild, Peter, Dr.**
**Droste-Hülshoff-Strasse 2**
**D-5068 Odenthal(DE)**

(54) **Basische Farbstoffe.**

(57) Basische Farbstoffe der Formel

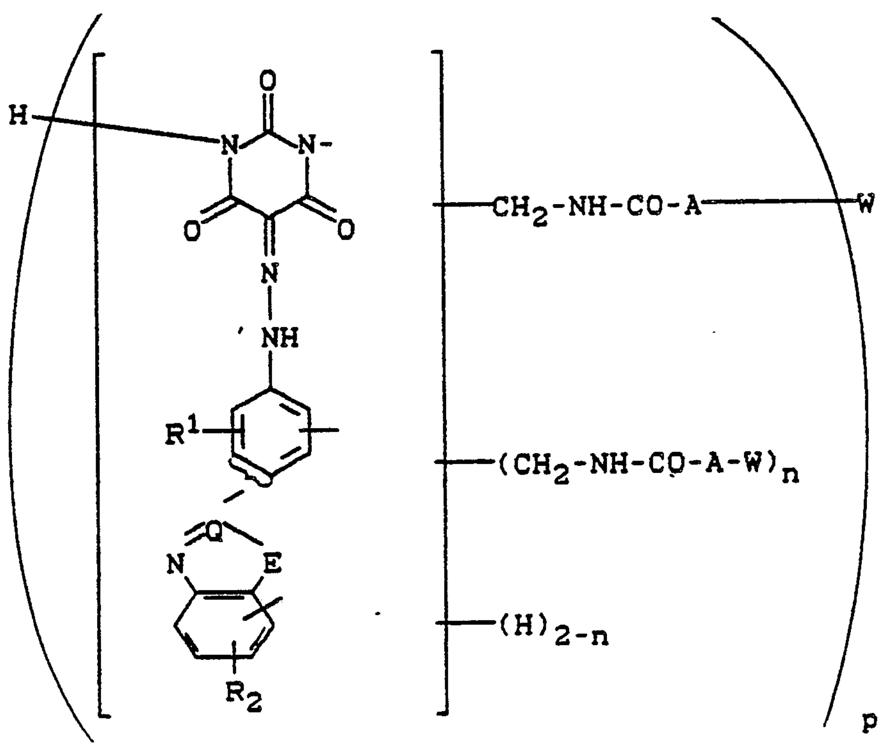

EP 0 321 778 A2

oder deren tautomere Formen, worin

$R_1$, $R_2$ für Wasserstoff, $C_1$-$C_4$-Alkyl, $C_1$-$C_4$-Alkoxy oder Halogen,

Q - E für C-S, C-O, C-NH, $\overset{\oplus}{N}$ - $\overset{\ominus}{N}$,

A für $C_1$-$C_4$-Alkylen,

W für den Rest eines aliphatischen Mono-, Di-, Tri-, Tetra-, Penta-, Hexa- oder Heptamins, der protoniert oder quaterniert sein kann,

n für 0 bis 1,5 und

p für 1,3 bis 10 stehen,

sind zum Färben von mit basischen Farbstoffen färbbaren Materialien geeignet.

## Basische Farbstoffe

Die Erfindung betrifft basische Farbstoffe der Formel

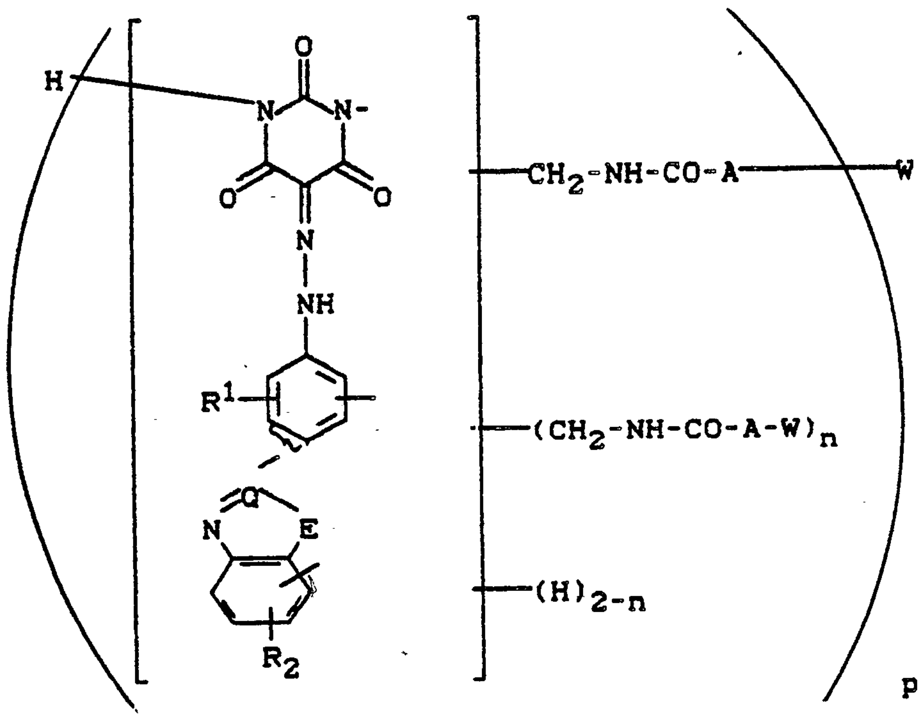

(I)

oder deren tautomere Formen, worin

$R_1$, $R_2$ für Wasserstoff, $C_1$-$C_4$-Alkyl, $C_1$-$C_4$-Alkoxy oder Halogen,

Q - E für C-S, C-O, C-NH, $\overset{\oplus}{N}$ - $\overset{\ominus}{N}$,

A für $C_1$-$C_4$-Alkylen,

W für den Rest eines aliphatischen Mono-, Di-, Tri-, Tetra-, Penta-, Hexa- oder Heptamins, der protoniert oder quaterniert sein kann,

n für 0 bis 1,5 und

p für 1,3 bis 10 stehen,

ihre Herstellung und ihre Verwendung zum Färben von mit basischen Farbstoffen färbbaren Materialien.

Halogen steht vorzugsweise für Chlor oder Brom.

W steht vorzugsweise für den Rest

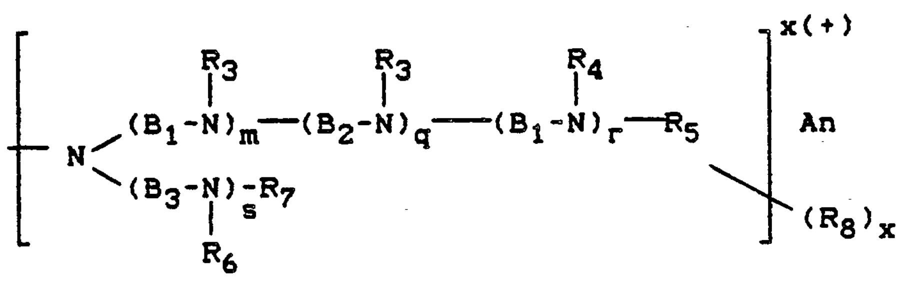

worin

m 0, 1, 2 oder 3,

q,r 0 oder 1,

s 0, 1 oder 2,

x 0, 1, 2 oder 3,

$B_1$, $B_2$ $C_2$- oder $C_3$-Alkylen,

$B_3$ $C_2$-$C_6$-Alkylen oder $C_4$-$C_{10}$-Alkylen, das durch 1 bis 3 Sauerstoffe unterbrochen ist, und

$R_3$ bis $R_7$ Wasserstoff, $C_1$-$C_4$-Alkyl, durch OH oder $C_1$-$C_4$-Alkoxy substituiertes $C_2$-$C_4$-Alkyl bedeuten, oder

$R_4$ und $R_5$ oder - wenn $m + q + r + s = 0$ -

$R_5$ und $R_7$ zu einem 5- oder 6-gliedrigen Ring geschlossen sind,

$R_8$ Methyl, Ethyl, Hydroxyethyl oder Hydroxypropyl und

An die Ladung x (+) kompensierende Äquivalente eines Anions bedeuten.

Als 5- bzw. 6-gliedrige Ringe sind bevorzugt

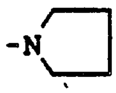 , 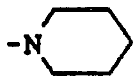 , 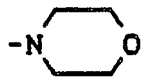 , 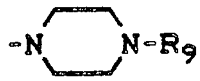

mit

$R_9$ Wasserstoff, $C_1$-$C_4$-Alkyl, durch OH, $NH_2$ oder $C_1$-$C_4$-Alkoxy substituiertes $C_2$-$C_4$-Alkyl.

Als Anionen An kommen alle die für kationische Farbstoffe üblichen organischen und anorganischen Anionen in Betracht. Bevorzugt sind farblose Anionen.

Das Anion ist im allgemeinen durch das Herstellungsverfahren und die eventuell vorgenommene Reinigung der Ausgangsstoffe gegeben. Die Anionen können aber auch in bekannter Weise gegen andere Anionen ausgetauscht werden. Als Beispiele für An seien genannt: Halogenide wie Chlorid, Bromid und Jodid; Sulfat, Hydrogensulfat, Methylsulfat, Ethylsulfat, Amidosulfat, Perchlorat, Phosphat, Hydroxid, Formiat, Acetat, Propionat, Oxalat, Malonat, Succinat, Maleinat, Chloracetat, Trichloracetat, Hydroxyacetat, Methoxyacetat, Ethoxyacetat, Lactat, Citrat, Benzoat, Methansulfonat, Ethansulfonat, Benzolsulfonat, p-Toluolsulfonat, Carbonat, Tetrachlorzinkat und Tetrafluoroborat.

Von den Farbstoffen der Formel (I) sind die der Formel

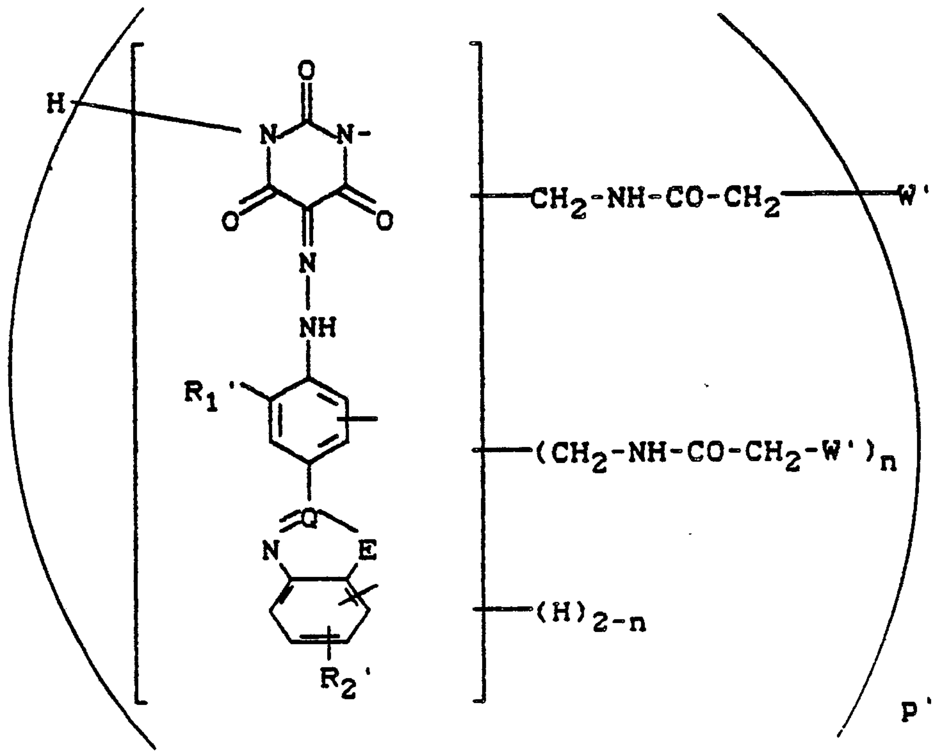

(II)

oder deren tautomere Formen bevorzugt, worin

$R_1'$ für Wasserstoff, Methoxy, Ethoxy oder Chlor,

$R_2'$ für Wasserstoff, Methyl, Ethyl, Methoxy oder Ethoxy,

$p'$ für 1,5 bis 6,

$W'$ für

1. 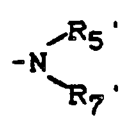

mit

$R_5'$ Methyl, Ethyl, n-Propyl oder $-CH_2-CH_2-OH$,

$R_7'$ Wasserstoff, Methyl, Ethyl, n-Propyl oder $-CH_2-CH_2-OH$,

2. 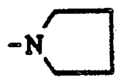, 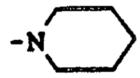, 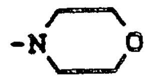, 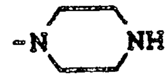,

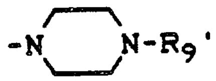 oder 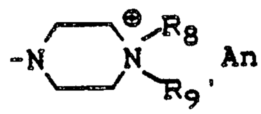

mit
$R_9'$ Methyl, Ethyl, $-CH_2-CH_2-OH$ oder $-CH_2-CH_2-NH_2$,
3. $-NH-B_3'-NH_2$
mit
$B_3'$ Ethylen, Propylen, Trimethylen, Hexamethylen oder $-(CH_2)_3-O-CH_2-CH_2-O-(CH_2)_3-$

4. 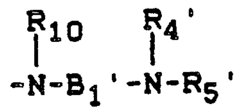

mit
$B_1'$ Ethylen oder Trimethylen
$R_4'$ Wasserstoff, Methyl, Ethyl, n-Propyl oder $-CH_2-CH_2-OH$ oder
$NR_4'R_5'$ steht für einen der folgenden Ringe:

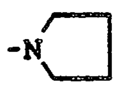, 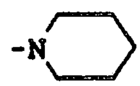, 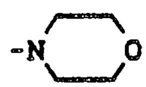, 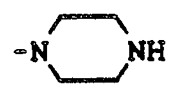,

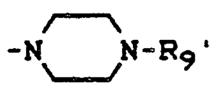 oder 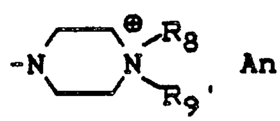

$R_{10}$ Wasserstoff, Methyl oder Ethyl

5. 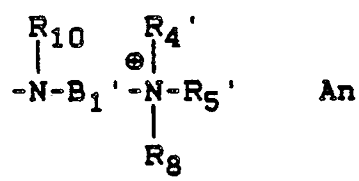,

6. 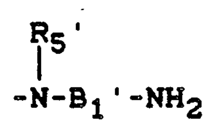

7. 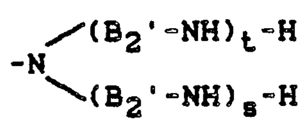

mit
t = 1, 2, 3, 4 oder 5
s + t = 2, 3, 4 oder 5
$B_2'$ = Ethylen, Propylen, Trimethylen

8. 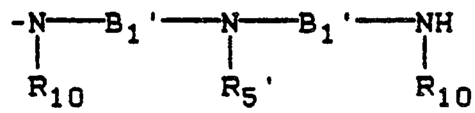

9. 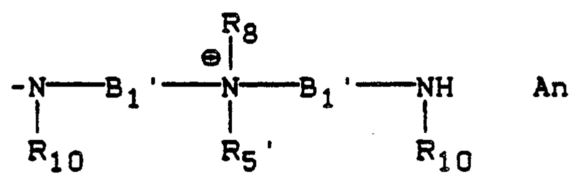

10. 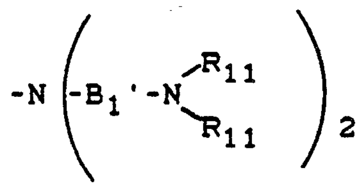

mit
$R_{11}$ = Methyl oder Ethyl

11. 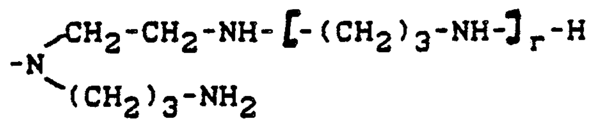

12. 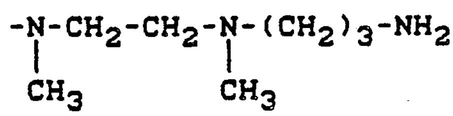

13. 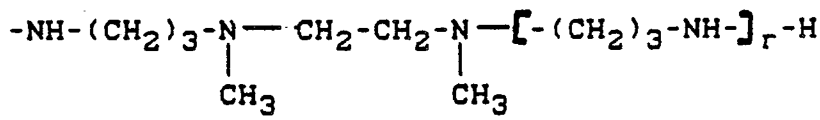

stehen, und Q-E und n die unter Formel (I) genannte Bedeutung haben.

Besonders bevorzugt sind basische Farbstoffe der Formel

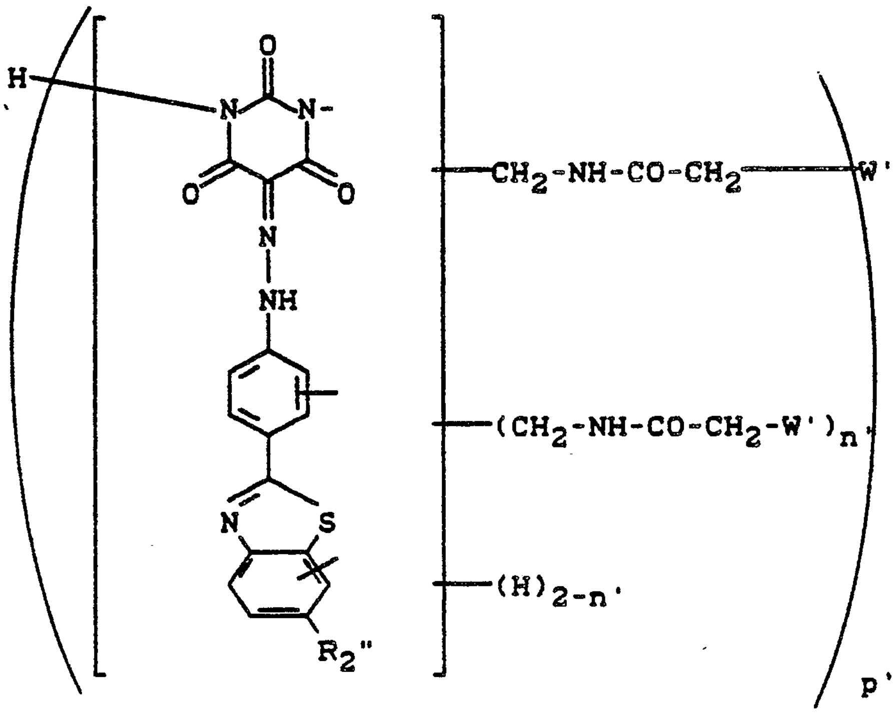

(III)

oder deren tautomere Formen, worin

$R_2''$ für Wasserstoff oder Methyl,

$n'$ für 0,2 bis 1,2 stehen und

$W'$ und $p'$ die unter Formel (II) genannte Bedeutung haben.

Von den Farbstoffen der Formel (III) seien die der Formel

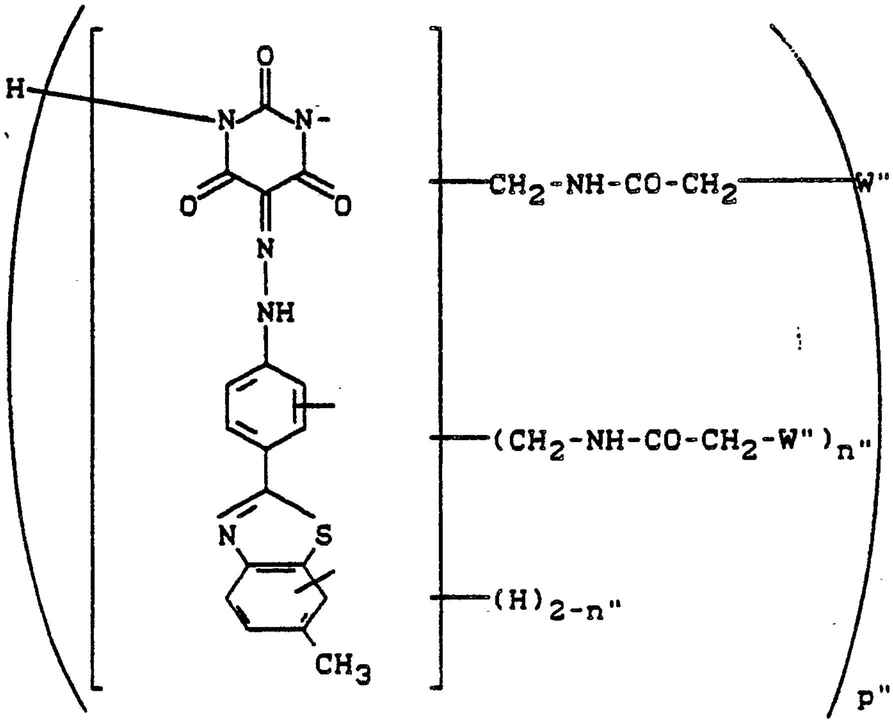

(IV)

oder deren tautomere Formen hervorgehoben, worin
W″ für die folgenden Reste steht

$-NH-(CH_2)_3-NH-CH_3$, $-NH-(CH_2)_3-NH-C_2H_5$,

$-NH-(CH_2)_3-N(CH_3)_2$, $-NH-(CH_2)_3-N(C_2H_5)_2$,

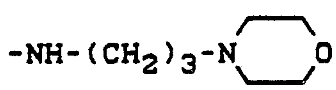,
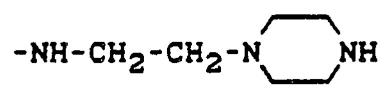,

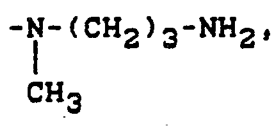
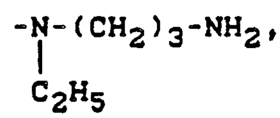

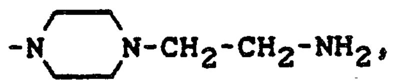,

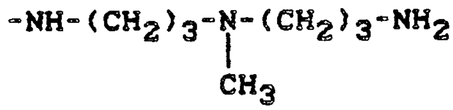

oder 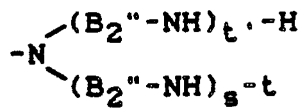

mit

$B_2''$ Ethylen oder Propylen,

$t'$ 2, 3 oder 4 und

$s + t'$ 3 oder 4 und

$n''$ für 0,4 bis 0,9 und

$p''$ für 2 bis 5 stehen.

Gegenstand der Erfindung ist auch ein Verfahren zur Herstellung von Farbstoffen der Formel (I), das dadurch gekennzeichnet ist, daß man eine Verbindung der Formel

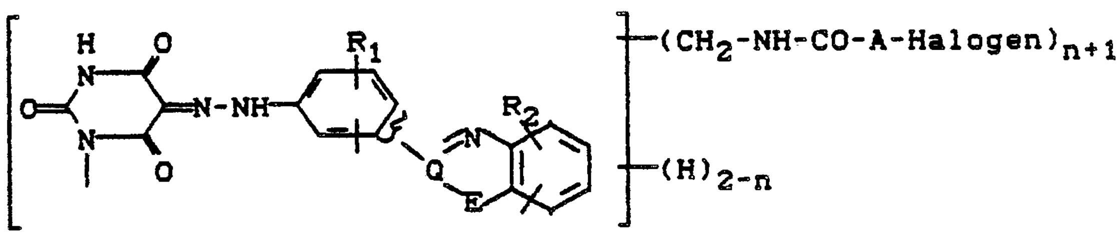

(V)

mit einem Amin der Formel

HW (VI)

oder mit Mischungen von Aminen dieser Formel in wäßrigalkalischem Medium zur Reaktion bringt. Dabei haben die in den Formeln (V) und (VI) verwendeten Symbole die unter Formel (I) angegebene Bedeutung.

Bevorzugt ist ein Verfahren zur Herstellung von Farbstoffen der Formel (III), das dadurch gekennzeichnet ist, daß man eine Verbindung der Formel

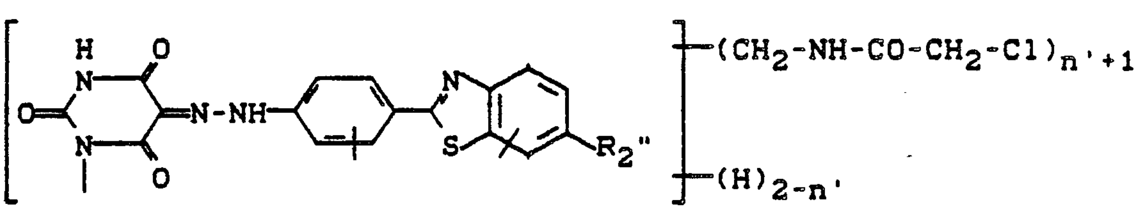

(VII)

mit einem Amin der Formel

HW′ (VIII)

oder mit Mischungen von Aminen dieser Formel in Wasser bei pH 9-12, vorzugsweise pH 10,0 bis 11,5 und einer Temperatur von 20-100° C, vorzugsweise 35-70° C zur Reaktion bringt. Dabei haben die Symbole W′ bzw. $R_2''$ und $n'$ die unter den Formeln (II) bzw. (III) genannten Bedeutungen.

Der pH-Wert wird durch Zugabe eines alkalisch reagierenden Mittels, besonders eines Alkalihydroxids

wie Natrium- oder Kaliumhydroxid aufrechterhalten.

Die Isolierung der Farbstoffe erfolgt bei dem erfindungsgemäßen Verfahren dadurch, daß nach beendeter Reaktion der pH-Wert auf 5-9, vorzugsweise auf 6-8 gesenkt wird, bevor man absaugt. Die Feststoffe können getrocknet werden oder in Form ihrer feuchten Preßkuchen in Flüssigeinstellungen verarbeitet werden.

Gegenstand der Erfindung ist ferner ein Verfahren zur Herstellung von Verbindungen der Formel (V) durch Umsetzung eines Chromophors der Formel

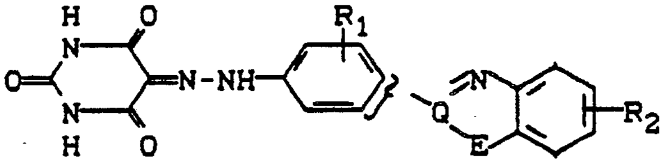

(IX)

in hochprozentiger Schwefel- oder Phosphorsäure oder in Polyphosphorsäure, gegebenenfalls unter Zusatz wasserabspaltender Mittel wie Schwefeltrioxid (Oleum), Phosphorpentoxid, Acetanhydrid, Benzol- oder Toluolsulfonsäure, mit Paraformaldehyd und einem Amid der Formel

$H_2N$-CO-Alkylen-Halogen (X)

bei 0 bis 140 °C.

Bevorzugt ist ein Verfahren, bei dem man zunächst Paraformaldehyd und ein Amid der Formel (X) in 96 bis 100 %iger Schwefelsäure oder bis zu 10 %igem Oleum bei 0 bis 60 °C zur Reaktion bringt und anschließend einen Chromophor der Formel (IX) zugibt und die weitere Umsetzung bei 0 bis 140 °C durchführt.

Bevorzugt ist ein Verfahren zur Herstellung von Verbindungen der Formel (VII), bei dem man zunächst Paraformaldehyd und 2-Chloracetamid in 98 bis 100 %iger Schwefelsäure oder bis zu 3 %igem Oleum bei 15-40 °C zur Reaktion bringt und anschließend einen Chromophor der Formel

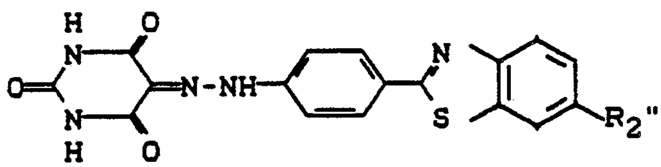

(XI)

mit $R_2''$ wie vorgenannt für Wasserstoff oder Methyl steht in die entstandene Lösung einträgt und die weitere Umsetzung bei 0 bis 80 °C durchführt. Dabei ist es vorteilhaft, zunächst bei 0 bis 5 °C zu beginnen und erst später die Temperatur zur erhöhen.

Gegenüber dem herkömmlichen Verfahren zur Herstellung von Vorprodukten der Formel (V), bei dem ein Chromophor der Formel (IX) mit einem N-Methylolamid der Formel

HO-$CH_2$-NH-CO-Alkylen-Halogen (XII)

umgesetzt wird, hat das erfindungsgemäße Verfahren den Vorteil, daß sich bei ihm die Bildung des N-Methylolamids der Formel (XII) und seine Umsetzung mit dem Chromophor der Formel (IX) in einer Stufe durchführen läßt. Bei dieser erfindungsgemäßen Eintopfreaktion treten überraschenderweise keine störenden Nebenreaktionen auf, die die Produktqualität gegenüber dem herkömmlichen Verfahren beeinträchtigen.

Die auf den gezeigten Wegen erhaltenen Farbstoffe können als gut wasserlösliche Farbstoffe aus wäßrig-saurer Lösung zum Färben von verschiedensten Materialien wie Cellulosematerialien, Polyacrylnitril, sauer modifiziertem Polyamid und Polyester, Wolle und Leder Verwendung finden.

Hervorragend geeignet sind die erfindungsgemäßen Farbstoffe vor allem zur Färben von verschiedensten Papierarten in klaren, gelben Tönen.

Beim Färben werden hohe Ausziehgrade erreicht, erkenntlich an der geringen Abwasserbelastung mit Farbstoff. Die Färbungen weisen gute bis sehr gute Licht- und Naßechtheiten auf. Sie sind gegen Einwirkung von Wasser, Alkoholen, Seifen oder wäßrigen organischen Säuren sehr beständig.

Beispiel 1

In 350 ml Monohydrat (= 100 %ige Schwefelsäure) werden bei Raumtemperatur 19,8 g Paraformaldehyd und anschließend 61,5 g Chloracetamid unter Kühlung eingetragen. Nach 2 Stunden Nachrühren wird auf 0° C gekühlt. Unter Kühlung bei 0-5° C werden 100 g der Verbindung

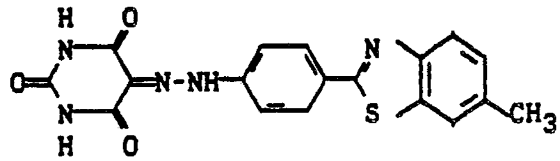

eingetragen. Man rührt weitere 2 Stunden bei 0-5° C, läßt auf Raumtemperatur kommen und rührt weiter über Nacht. Anschließend wird erwärmt und 4 Stunden bei 60° C gerührt. Nach Erkalten wird auf Eis ausgerührt, abgesaugt und mit Wasser neutral gewaschen. Man erhält 560 g eines feuchten Nutschkuchens entsprechend 151 g trockenes Produkt der Formel

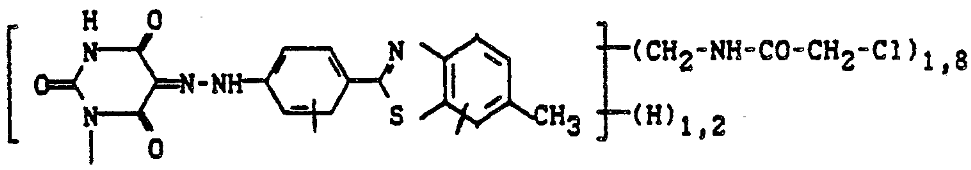

Die Elementaranalyse einer bei 60° getrockneten Probe ergab 11,1 % Chlor.
$\lambda_{max}$ (DMF) 412 nm.

Zu dem gleichen Ergebnis gelangt man, wenn man zunächst Chloracetamid und anschließend Paraformaldehyd oder eine Mischung beider Substanzen in Schwefelsäure einträgt.

## Beispiel 2

Verfährt man wie in Beispiel 1, setzt jedoch 15 g Paraformaldehyd und 47 g Chloracetamid ein, erhält man 620 g feuchte Ware entsprechend 150 g trockenes Produkt der Formel

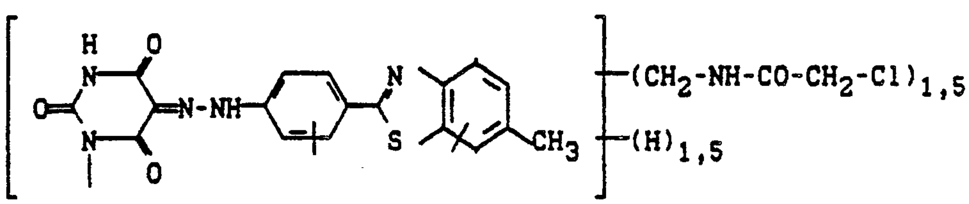

Elementaranalyse: 9,9 % Chlor und 6,1 % Schwefel
$\lambda_{max}$ (DMF) 412 nm

## Beispiel 3

Verfährt man wie in Beispiel 1, setzt jedoch 12 g Paraformaldehyd und 37 g Chloracetamid ein erhält man 706 g feuchte Ware entsprechend 131 g trockenes Produkt der Formel

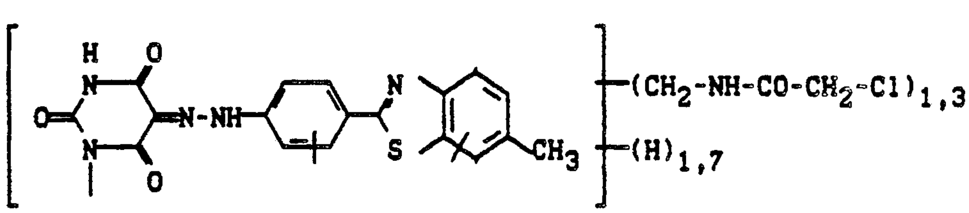

Elementaranalyse: 8,8 % Chlor und 6,3 % Schwefel
$\lambda_{max}$ (DMF) 411 nm

Beispiel 4

Zu dem Produkt des vorstehenden Beispiels gelangt man auch, wenn man 100 g der Verbindung

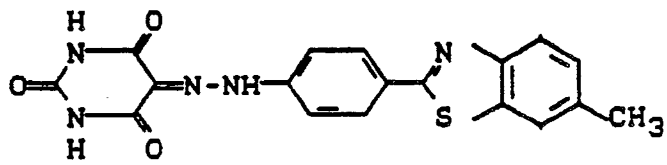

und 45 g N-Methylolchloracetamid als Mischung in 500 ml 2 %iges Oleum bei 0-5 °C einträgt und 2 Stunden bei dieser Temperatur nachrührt. Nach Rühren bei Raumtemperatur über Nacht, erhitzt man die Lösung kurz auf 120 °C und arbeitet nach Abkühlen wie in Beispiel 1 auf.

Beispiel 5

Verfährt man wie in Beispiel 4, setzt aber nur 40 g N-Methylolchloracetamid ein, erhält man 120 g der Verbindung

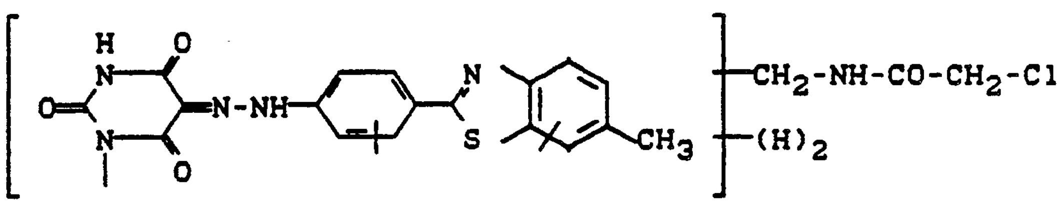

deren Elementaranalyse 7,3 % Chlor und 6,7 % Schwefel aufweist.
$\lambda_{max}$ (DMF) 410 nm

Beispiel 6

Zu dem gleichen Produkt wie in Beispiel 5 gelangt man, wenn man gemäß Beispiel 1 verfährt, jedoch nur 10 g Paraformaldehyd und 31 g Chloracetamid einsetzt.

Beispiel 7

371 g des feuchten Nutschkuchens aus Beispiel 1 werden in 2,7 l Wasser eingetragen. Man fügt 37 g 3-Amino-1-methylaminopropan hinzu und heizt auf 45 °C auf, wobei der pH-Wert durch Zugabe von 1n NaOH bei 11 gehalten wird. Man rührt so lange bei 45 °C bis der pH-Wert konstant ist. Nach weiteren 3 Stunden wird mit verdünnter Salzsäure auf pH 6,5 gestellt, auf 80 °C erhitzt und nach Kaltrühren abgesaugt. Man wäscht mit entsalztem Wasser chloridfrei und erhält so 242 g feuchte Ware. Nach Trocknen bei 60° werden daraus 94 g einer Verbindung der Formel

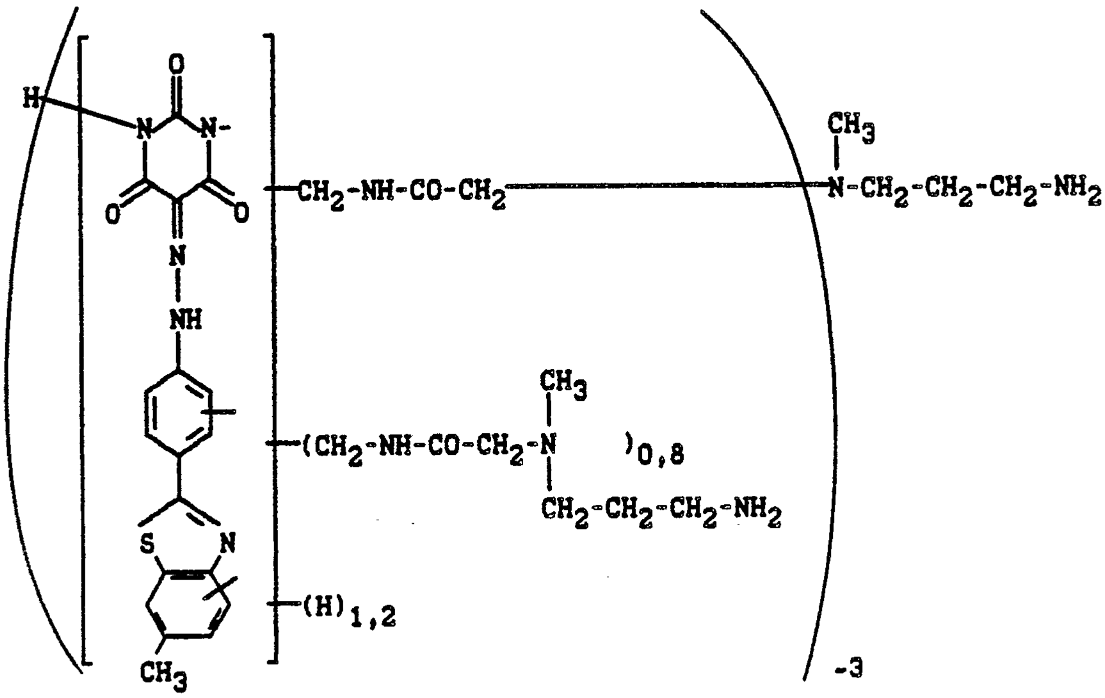

erhalten.

Als Nebenkomponenten treten des Verknüpfungsisomere (Amin-Chromophor-Bindung über die primäre Aminogruppe) und verbrückte Produkte (Verknüpfung zweier Chromophore über ein Amin) auf. Die Verbindung färbt Papier etwas rotstichig gelb $\lambda_{max}$ (20 %ige Essigsäure) 410 nm.

Beispiel 8

471 g des feuchten Nutschkuchens aus Beispiel 2 werden in 3,1 l Wasser eingetragen. Man fügt 39 g 3-Amino-1-methylaminopropan hinzu, heizt auf 40° C und hält dabei den pH-Wert bei 10,5. Nach 1 Stunde stellt man auf pH 11 und hält so lange bei 40° bis der pH-Wert konstant bleibt. Verfährt man nun wie in Beispiel 7 angegeben erhält man nach Trocknen 115 g eines Produktes, in dem die Verbindung der Formel

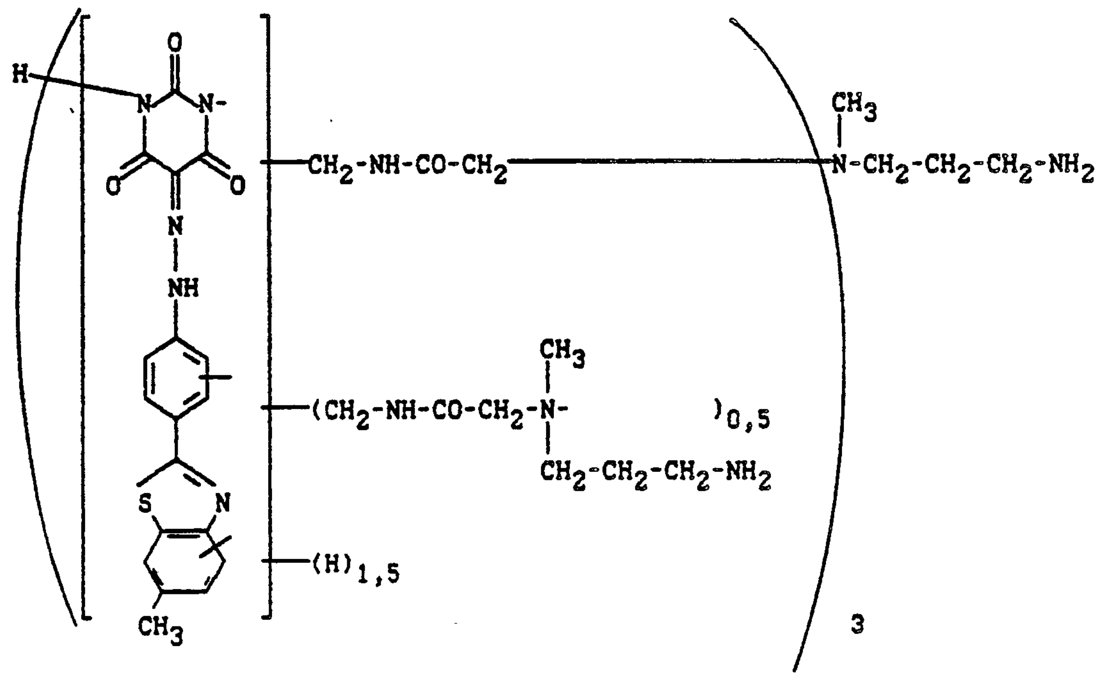

Hauptkomponente ist. Dieses Produkt färbt Papier etwas rotstichig gelb.

Beispiel 9

296 g des feuchten Nutschkuchens aus Beispiel 3 werden bei Raumtemperatur in 1,9 l Wasser eingetragen. Man fügt 14,5 g 3-Amino-1-methylaminopropan hinzu, heizt auf 60 °C auf und hält durch Zugabe von 1n NaOH den pH-Wert bei 10,5. Wenn er sich nach ca. 4 Stunden nicht mehr verändert, wird mit halbkonzentrierter Salzsäure auf pH 7 gestellt, auf 80 °C erhitzt und 1 Stunde gehalten. Das Produkt wird heiß abgesaugt, chloridfrei gewaschen und bei 60 °C getrocknet. Man erhält 54 g des Farbstoffes mit einer Hauptkomponente der Formel

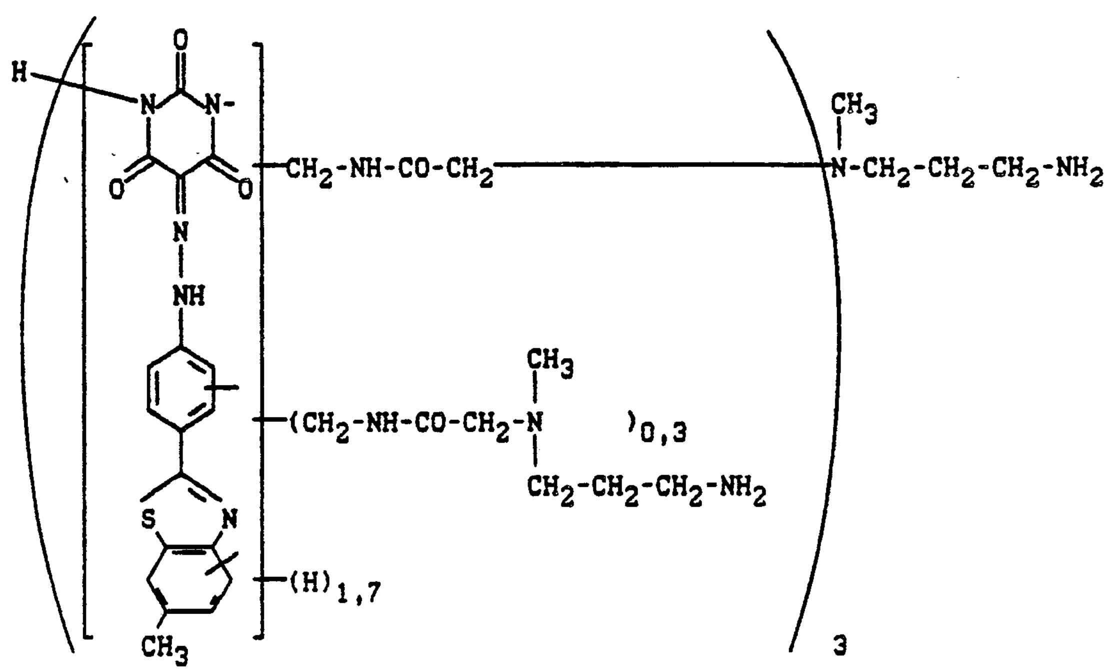

$\lambda_{max}$ (20 %ige Essigsäure) 408 nm.

Beispiel 10

296 g des feuchten Nutschkuchens aus Beispiel 3 werden bei Raumtemperatur in 1,9 l Wasser eingetragen. Man fügt 44 g 3-Amino-1-dimethylaminopropan hinzu und verfährt im weiteren wie in Beispiel 9. Nach Trocknen erhält man 51 g des Farbstoffes der Formel

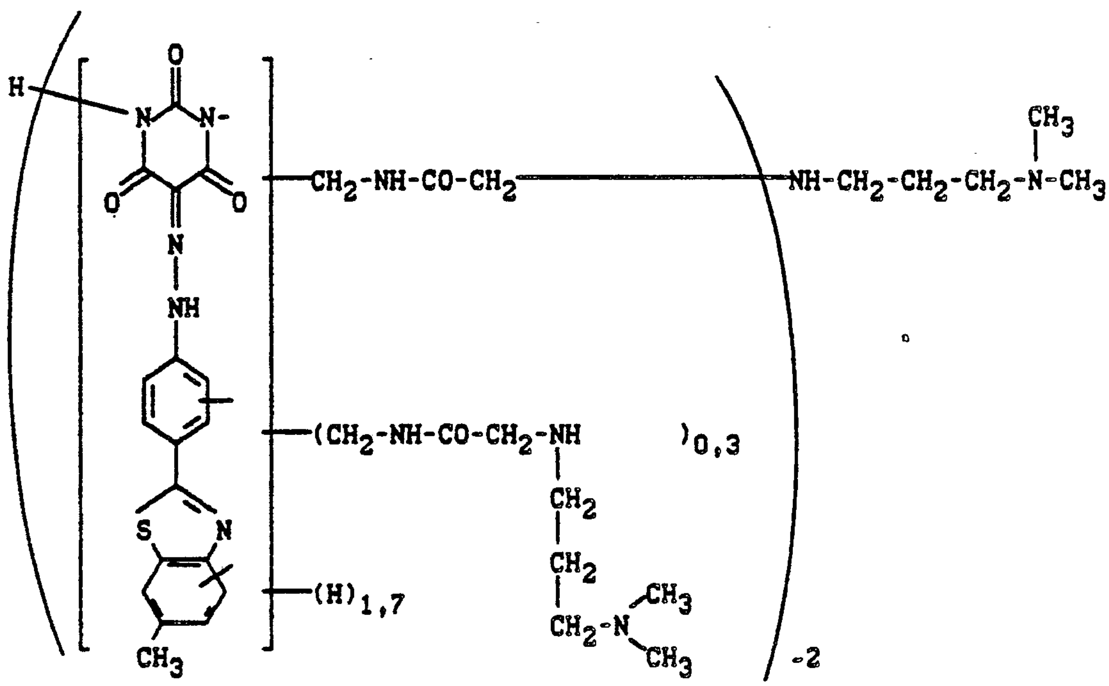

$\lambda_{max}$ (20 %ige Essigsäure) 409 nm.

Beispiel 11

Verfährt man wie in Beispiel 10, setzt aber nur 16,5 g 3-Amino-1-dimethylaminopropan ein, erhält man 51 g des Farbstoffes der Formel

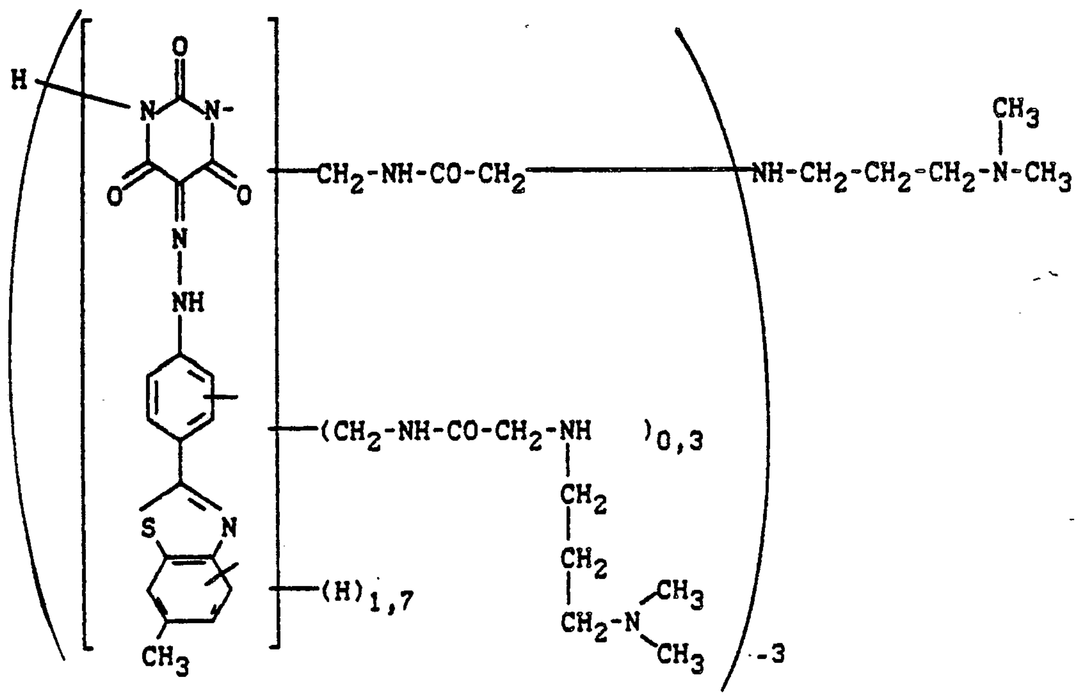

$\lambda_{max}$ (20 %ige Essigsäure) 404 nm.

Beispiel 12

30 g der Verbindung aus Beispiel 5 oder 6 werden bei Raumtemperatur in 50 ml 3-Amino-1-dimethylaminopropan gelöst. Die Lösung wird bei 50-60° im Vakuum eingeengt und das verbleibende gelbe Öl durch digerieren mit Aceton in ein Pulver überführt. Dieses wird abgesaugt und mit Aceton nachgewaschen. Trocknen bei 60° liefert 34 g des Farbstoffes der Formel

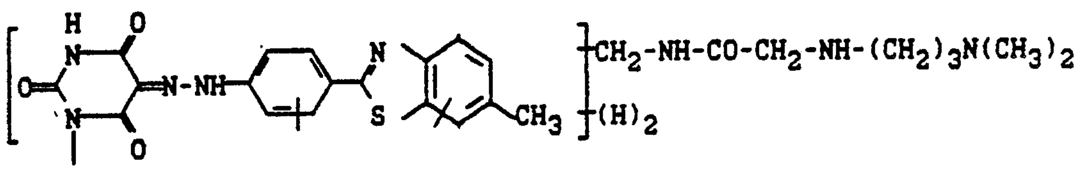

$\lambda_{max}$ (20 %ige Essigsäure) 412 nm.

In den folgenden Beispielen wird gemäß Beispiel 7 das Vorprodukt aus Beispiel 1 statt mit 37 g 3-Amino-1-methylaminopropan mit den in Tabelle 1 angegebenen Mengen der dort aufgeführten Amine umgesetzt. Die so erhaltenen Produkte enthalten als Hauptkomponente Farbstoffe der allgemeinen Formel

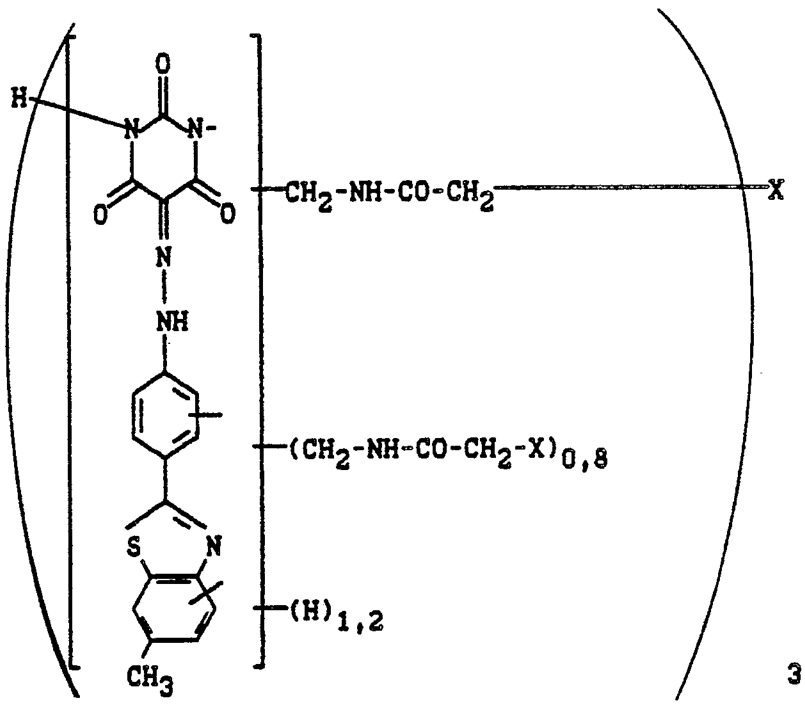

wobei X für einen einwertigen Rest der aufgeführten Amine steht. Die Farbstoffe färben Papier etwas rotstichig gelb. Um Farbstoffe der vorstehenden Formel zu erhalten, können auch Mischungen der in den Beispielen genannten Amine eingesetzt werden.

Tabelle 1

| Beispiele | Amin | g Einsatz | g Ausbeute |
|---|---|---|---|
| 13 | $H_2N-(CH_2-CH_2-NH-)_3-H$ | 60 | 92 |
| 14 | $H_2N-(CH_2-CH_2-NH-)_4-H$ | 77 | 90 |
| 15 | Tripropylentetramin | 79 | 93 |
| 16 | $H_2N-(CH_2)_3-NH-C_2H_5$ | 43 | 95 |
| 17 | $H_2N-CH_2-CH_2-N(C_2H_5)_2$ | 49 | 95 |
| 18 | $H_2N-CH_2-CH_2-$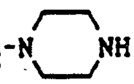 | 54 | 94 |
| 19 | $H_2N-(CH_2)_3-N(CH_3)_2$ | 43 | 93 |
| 20 | $H_2N-(CH_2)_3-N(C_2H_5)_2$ | 54 | 94 |
| 21 | $(H_2N-CH_2-CH_2-CH_2-)_2-N-CH_3$ | 59 | 91 |
| 22 | $H_2N-CH_2-CH_2-CH_2-$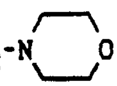 | 61 | 96 |
| 23 | $H_2N-(CH_2)_3-NCH_3-CH_2-CH_2-OH$ | 55 | 95 |
| 24 | $H_2N-(CH_2)_3-N(CH_2-CH_2-OH)_2$ | 67 | 95 |
| 25 | $H_2N(CH_2)_3-NH-CH_2-CH_2-OH$ | 50 | 91 |
| 26 | $(H_2N-CH_2-CH_2-CH_2-)_2-NH$ | 55 | 93 |
| 27 | $H_2N-CH_2-CHCH_3-NH_2$ | 31 | 96 |
| 28 | 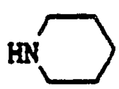 | 36 | 94 |
| 29 | $(CH_3-NH-CH_2-CH_2)_2N-CH_3$ | 61 | 95 |
| 30 | $H_2N-CH_2-CH_2-NH_2$ | 25 | 91 |

In den folgenden Beispielen wird gemäß Beispiel 8 das Vorprodukt aus Beispiel 2 statt mit 39 g 3-Amino-1-methylaminopropan mit den in Tabelle 2 angegebenen Mengen der dort aufgeführten Amine umgesetzt. Die so erhaltenen Produkte enthalten als Hauptkomponente Farbstoffe der allgemeinen Formel

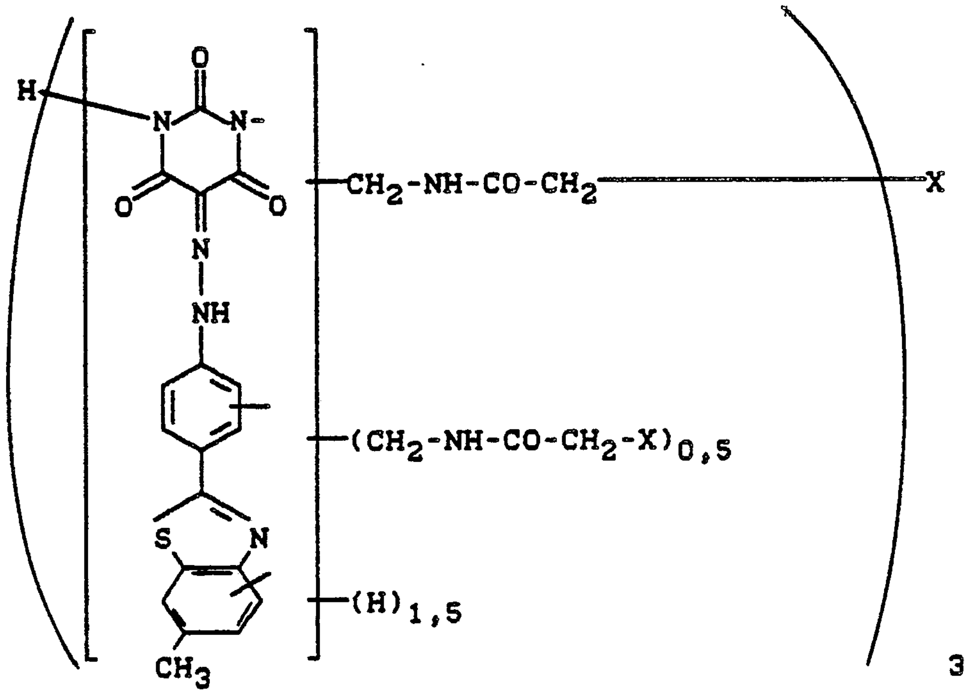

wobei X für einen einwertigen Rest der aufgeführten Amine steht. Die Farbstoffe färben Papier etwas rotstichig gelb. Um Farbstoffe der vorstehenden Formel zu erhalten, können auch Mischungen der in den Beispielen genannten Amine verwendet werden.

Tabelle 2

| Beispiele | Amin | g Einsatz | g Ausbeute |
|---|---|---|---|
| 31 | $H_2N-CH_2-CH_2-N(C_2H_5)_2$ | 51 | 116 |
| 32 | $H_2N-(CH_2-CH_2-NH)_2-H$ | 45 | 116 |
| 33 | $H_2N-(CH_2-CH_2-NH)_3-H$ | 62 | 117 |
| 34 | $H_2N-(CH_2-CH_2-NH)_4-H$ | 78 | 111 |
| 35 | Dipropylentriamin | 56 | 114 |
| 36 | Tripropylentetramin | 80 | 110 |
| 37 | $H_2N-(CH_2)_3-N(CH_3)_2$ | 45 | 114 |
| 38 | $[(CH_3)_2N-CH_2-CH_2-CH_2-]_2-NH$ | 80 | 113 |
| 39 | $(H_2N-CH_2-CH_2-CH_2)_2-N-CH_3$ | 61 | 115 |
| 40 | $H_2N-(CH_2)_6-NH_2$ | 51 | 109 |
| 41 | $H_2N-CH_2-CH_2-$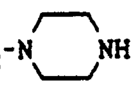 | 57 | 110 |
| 42 | $H_2N-(CH_2)_3-NH-C_2H_5$ | 45 | 116 |
| 43 | $H_2N-(CH_2)_3-$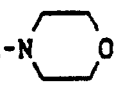 | 63 | 117 |
| 44 | $HN(CH_3)_2$ | 20 | 109 |
| 45 | 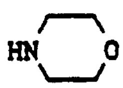 | 38 | 111 |
| 46 | 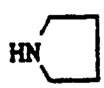 | 31 | 109 |
| 47 | $H_2N-CH_2-CH_2-NH_2$ | 27 | 112 |

In den folgenden Beispielen wird gemäß Beispiel 9 das Vorprodukt aus Beispiel 3 statt mit 14,5 g 3-Amino-1-methylaminopropan mit den in Tabelle 3 angegebenen Mengen der dort aufgeführten Amine umgesetzt. Die so erhaltenen Produkte enthalten als Hauptkomponente Farbstoffe der allgemeinen Formel

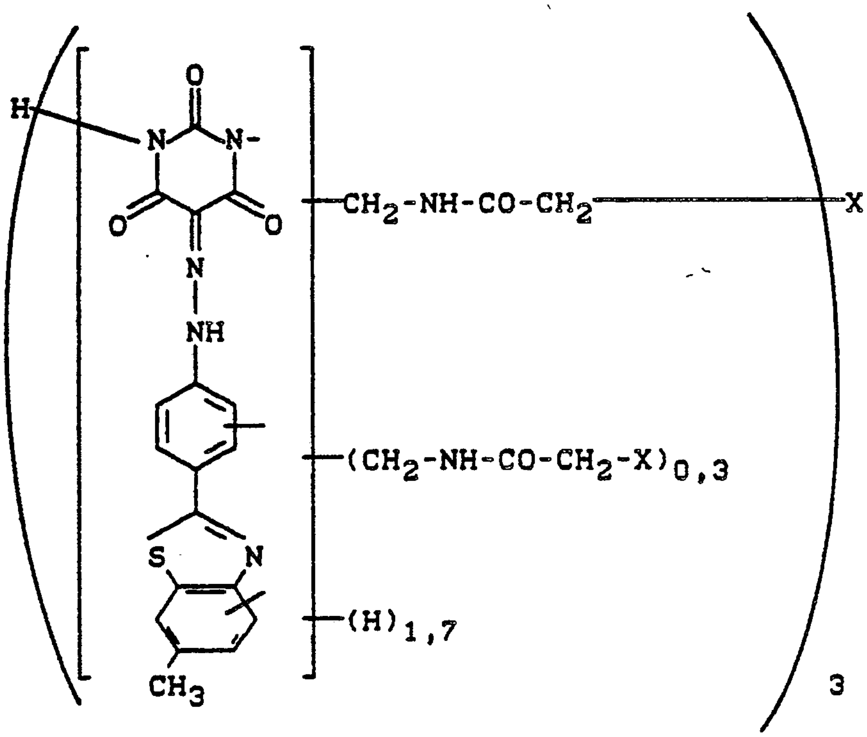

wobei X für einen einwertigen Rest der aufgeführten Amine steht. Es können auch Mischungen der in den Beispielen genannten Amine verwendet werden. Die Farbstoffe färben Papier etwas rotstichig gelb.

**Tabelle 3**

| Beispiele | Amin | g Einsatz | g Ausbeute |
|---|---|---|---|
| 48 | $H_2N-(CH_2-CH_2-NH)_4-H$ | 28 | 54 |
| 49 | $H_2N-(CH_2-CH_2-NH)_5-H$ | 35 | 55 |
| 50 | $CH_3-NH-(CH_2-CH_2-NH)_2-CH_3$ | 28 | 54 |
| 51 | $(H_2N-(CH_2)_3-NCH_3-CH_2-)_2$ | 31 | 53 |
| 52 | $(H_2N-(CH_2)_3-O-CH_2-)_2$ | 27 | 54 |
| 53 | $(H_2N-(CH_2)_3-NH-CH_2-)_2$ | 27 | 54 |
| 54 | $H_2N-(CH_2)_3-$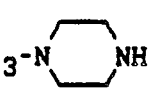 | 20 | 55 |
| 55 | Tripropylentetramin | 28 | 53 |
| 56 | $(H_2N-CH_2-CH_2-CH_2)_2-N-CH_3$ | 23 | 54 |
| 57 | $[(CH_3)_2N-CH_2-CH_2-CH_2]_2-NH$ | 28 | 55 |
| 58 | $H_2N-(CH_2)_3-NH-CH_2-CH_2-NH_2$ | 19 | 52 |

In den folgenden Beispielen werden die in Tabelle 4 aufgeführten Mengen chromophorer Verbindungen

der allgemeinen Formel

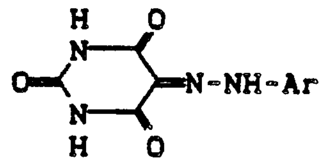

gemäß Beispiel 1 mit 15 g Paraformaldehyd und 47 g Chloracetamid umgesetzt. Man erhält Farbstoffvorprodukte der allgemeinen Formel

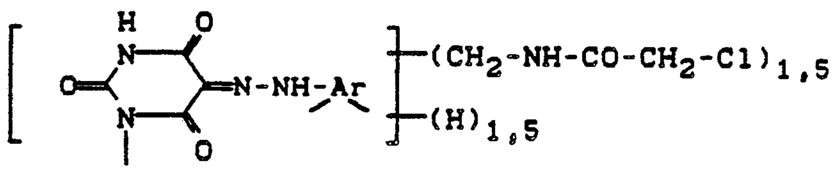

deren Ausbeuten ebenfalls tabelliert sind.

Tabelle 4

| Beispiel | Ar | g Einsatz | g Ausbeute |
|---|---|---|---|
| 59 | 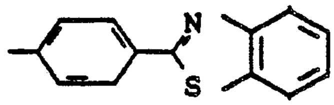 | 96 | 138 |
| 60 | 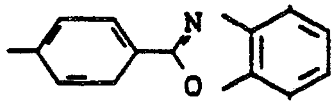 | 92 | 126 |
| 61 | 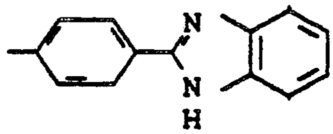 | 92 | 128 |
| 62 | 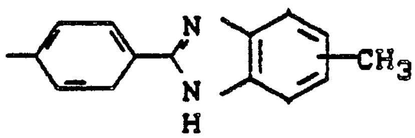 | 96 | 131 |
| 63 | 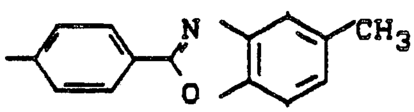 | 96 | 133 |
| 64 | 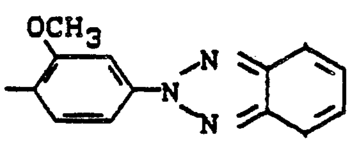 | 100 | 116 |

Beispiel 65

111 g des Produktes aus Beispiel 59 werden in 3,2 l Wasser mit 56 g N-(2-Aminoethyl)-piperazin gemäß Beispiel 8 umgesetzt. Man erhält so 113 g eines Produktes mit einer Hauptkomponente der Formel

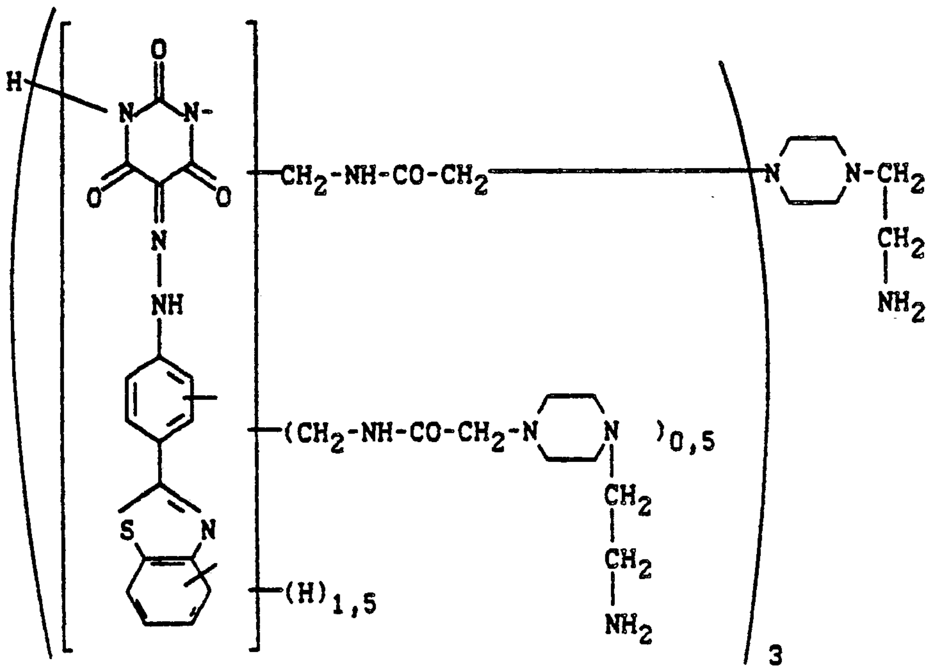

Das produkt färbt Papier neutral gelb.

Beispiel 66

107 g des Produktes aus Beispiel 60 werden in 2 l Wasser mit 62 g $(H_2N-CH_2-CH_2-CH_2)_2N-CH_3$ gemäß Beispiel 8 umgesetzt. Man erhält so 107 g eines Produktes mit einer Hauptkomponente der Formel

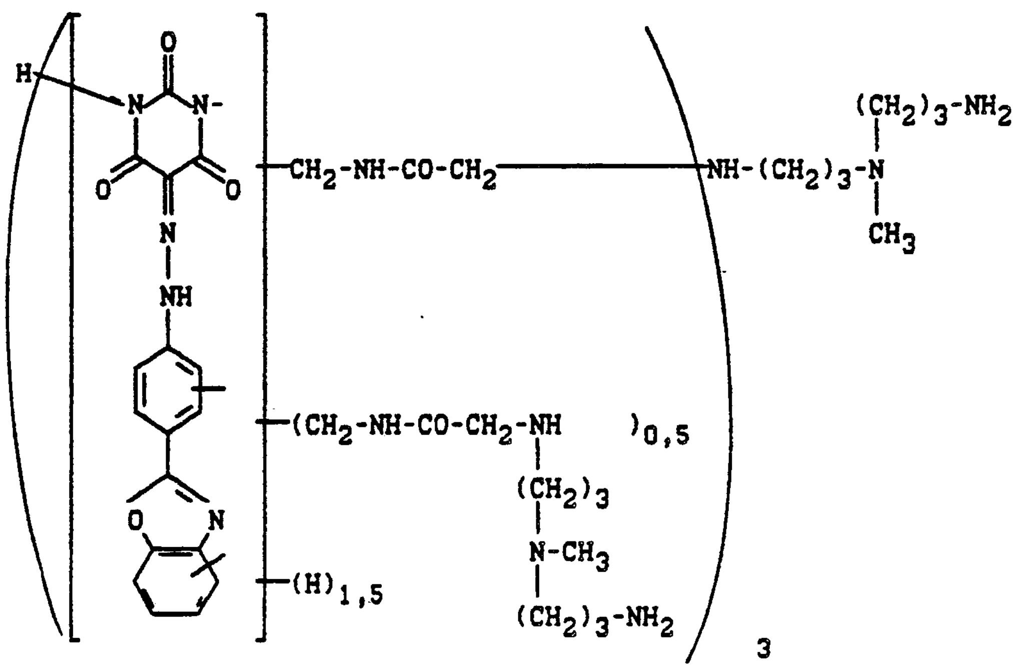

Das Produkt färbt Papier etwas grünstichig gelb.

Beispiel 67

Verfährt man wie im vorstehenden Beispiel setzt jedoch als Edukt die Verbindung aus Beispiel 61 statt der aus Beispiel 60 ein, erhält man 109 g eines Produktes mit einer Hauptkomponente der Formel

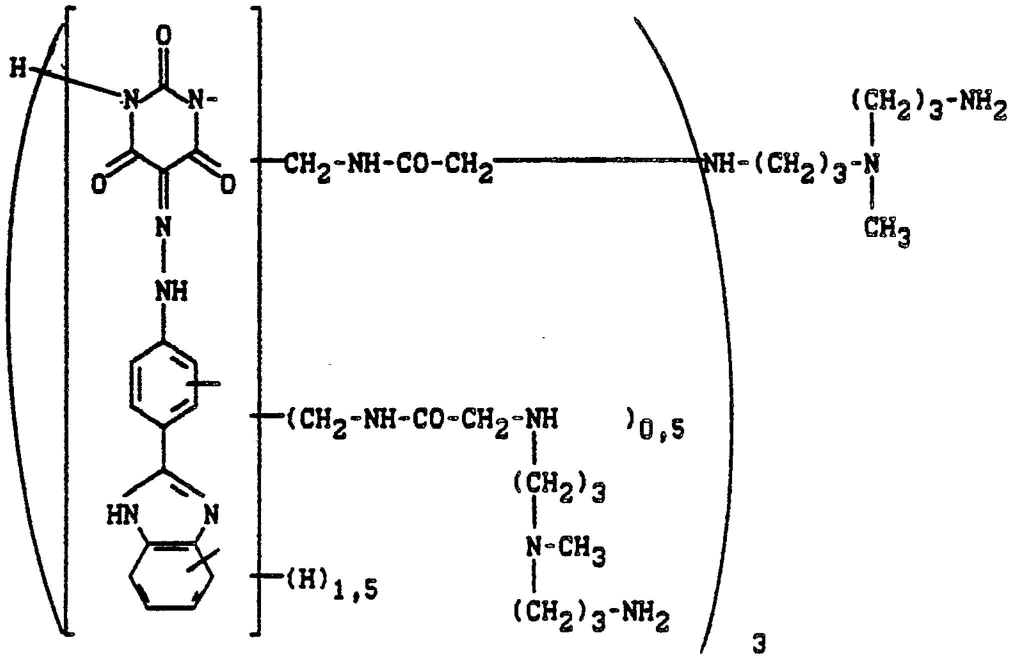

Das Produkt färbt Papier neutral gelb.

Beispiel 68

110 g der Verbindung aus Beispiel 62 werden in 2 l Wasser mit 62 g N-(3-Aminopropyl)-morpholin gemäß Beispiel 8 umgesetzt, wodurch man 109 g eines Produktes der Formel

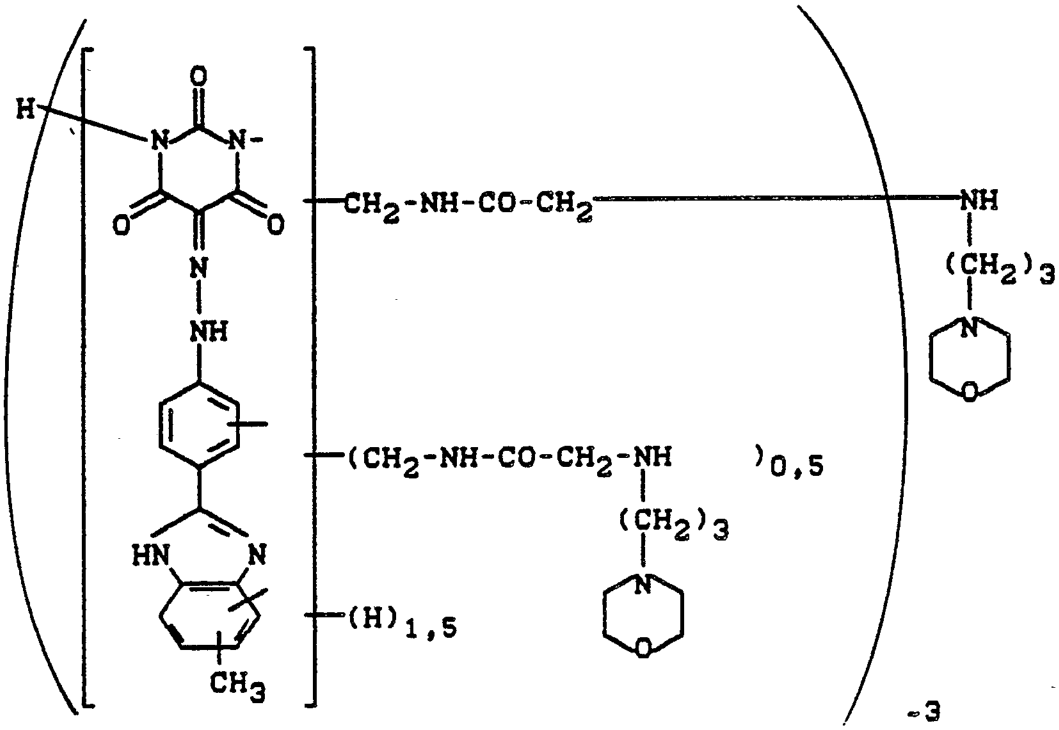

erhält, das Papier neutral gelb färbt.

Beispiel 69

Verfährt man wie im vorstehenden Beispiel, setzt aber als Edukt die Verbindung aus Beispiel 63 statt der aus Beispiel 62 ein, erhält man 110 g eines Produktes der Formel

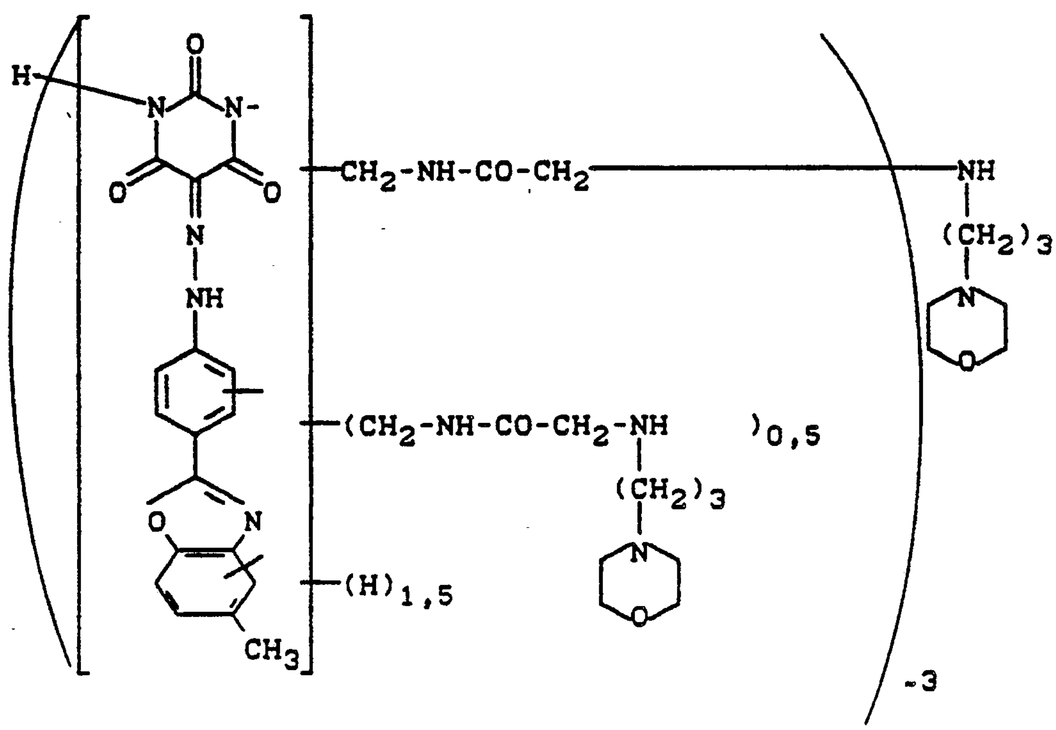

das Papier etwas grünstichig gelb färbt.

Beispiel 70

116 g des Produktes aus Beispiel 64 bei Raumtemperatur in 3 l Wasser eingetragen und auf 40 °C erwärmt. Man gibt auf einmal 58 g 3-Amino-1-diethylaminopropan hinzu und hält durch Zugabe von wäßriger KOH-Lösung den pH-Wert bei 11. Innerhalb von 6 Stunden wird die Temperatur auf 70 ° erhöht, dann wird durch Zugabe verdünnter Schwefelsäure auf pH 6 gestellt und abgesaugt. Nach Neutralwaschen und Trocknen erhält man 112 g des Farbstoffes der nachstehenden Formel, der Papier rotstichig gelb färbt.

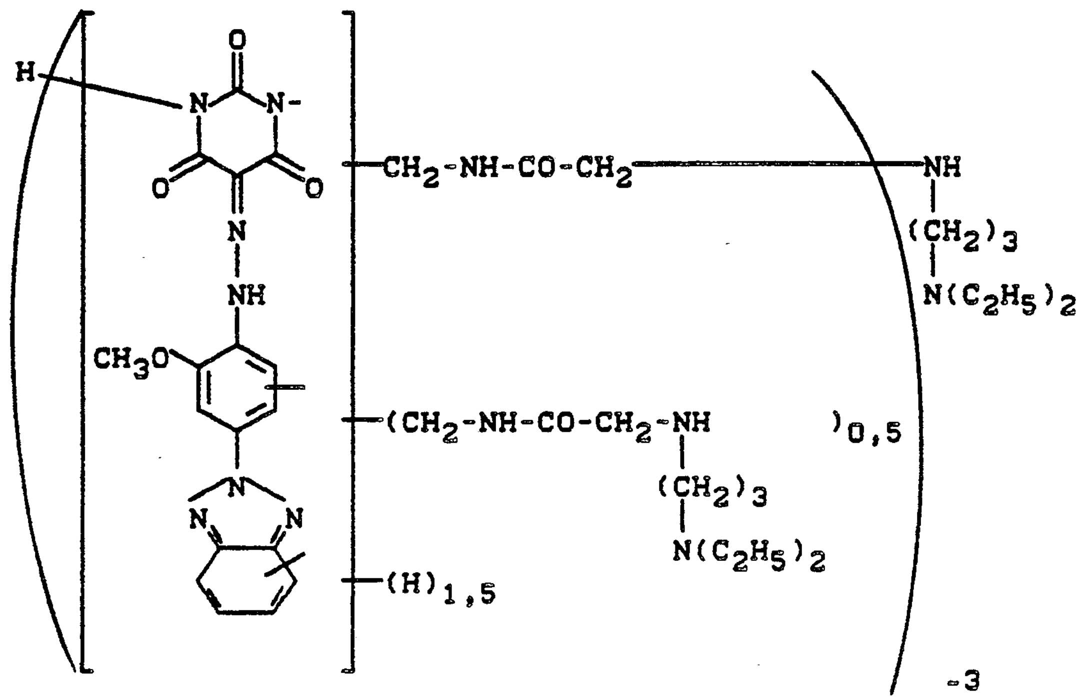

Beispiel 71

In 300 ml Monohydrat wird bei Raumtemperatur eine Mischung von 12 g Paraformaldehyd und 43 g 3-Chlorpropionsäureamid unter Kühlung eingetragen. Man hält dann 1 Stunde bei 30 °C, kühlt auf 0 bis 5 °C ab und trägt 100 g der Verbindung

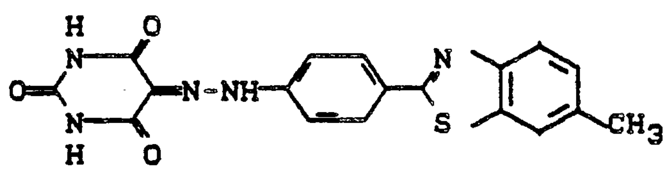

langsam ein. Verfährt man im übrigen wie in Beispiel 1 erhält man nach Trocknen 141 g der Verbindung

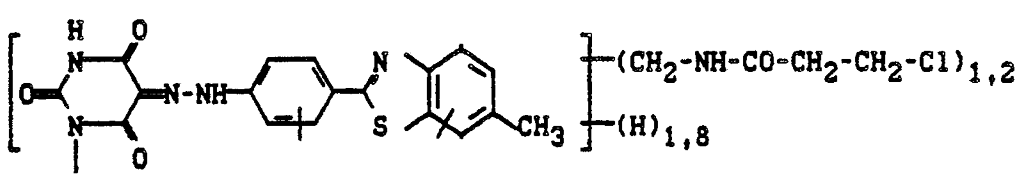

Elementaranalyse 8,0 % Chlor.

Die Verwendung der äquimolaren Menge 3-Brompropionsäureamid führt zu der analogen Bromverbindung.

Beispiel 72

In 1,5 l Wasser werden 55 g der Verbindung aus Beispiel 71 eingetragen, 16,5 g 3-Amino-1-dimethylaminopropan hinzugefügt und durch Zugabe von Soda der pH-Wert bei 10,7 gehalten. Dabei wird auf 60° erwärmt. Wenn nach ca. 5 Stunden der pH-Wert konstant bleibt wird mit konzentrierter Salzsäure langsam auf pH 7 gestellt, 1 Stunde bei 80°C nachgerührt und heiß abgesaugt. Salzfrei waschen und bei 60°C trocknen liefert 52 g eines Farbstoffes der Formel

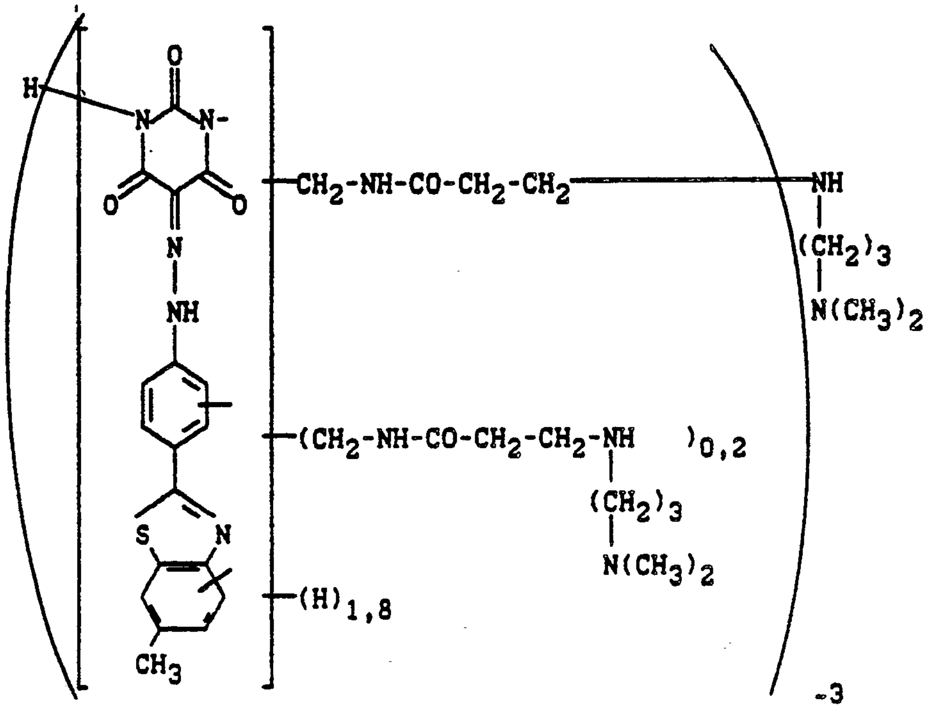

der Papier etwas rotstichig gelb färbt.
$\lambda_{max}$ (20 %ige Essigsäure) 411 nm.

Beispiel 73

Verfährt man wie in Beispiel 7, setzt aber als Amin 93 g 54 %ige wäßrige Dimethylaminlösung ein, erhält man Trocknen 91 g einer Verbindung der Formel

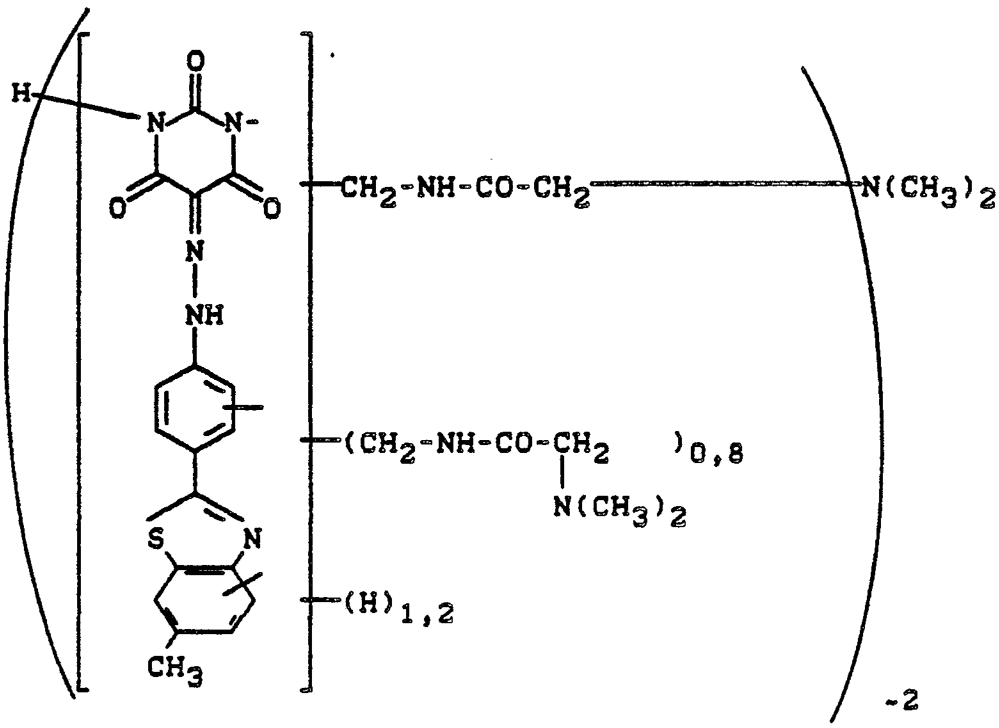

die Papier etwas rotstichig gelb färbt.

Beispiel 74

Das Produkt aus Beispiel 11 wird ohne vorherige Trocknung in Form seines feuchten Preßkuchens in 1 l Wasser angeschlämmt. Man versetzt mit 17 ml Dimethylsulfat und hält bei Raumtemperatur durch Zugabe von 1 n NaOH-Lösung bei pH 9. Nach 2 Stunden erwärmt man auf 40 °C und hält dabei weiterhin bei pH 9. Nach weiteren 2 Stunden wird mit verdünnter Salzsäure auf pH 6,5 gestellt, auf 80 ° erhitzt und abgesaugt. Salzfreiwaschen und Trocknen liefert 54 g eines Farbstoffes der Formel

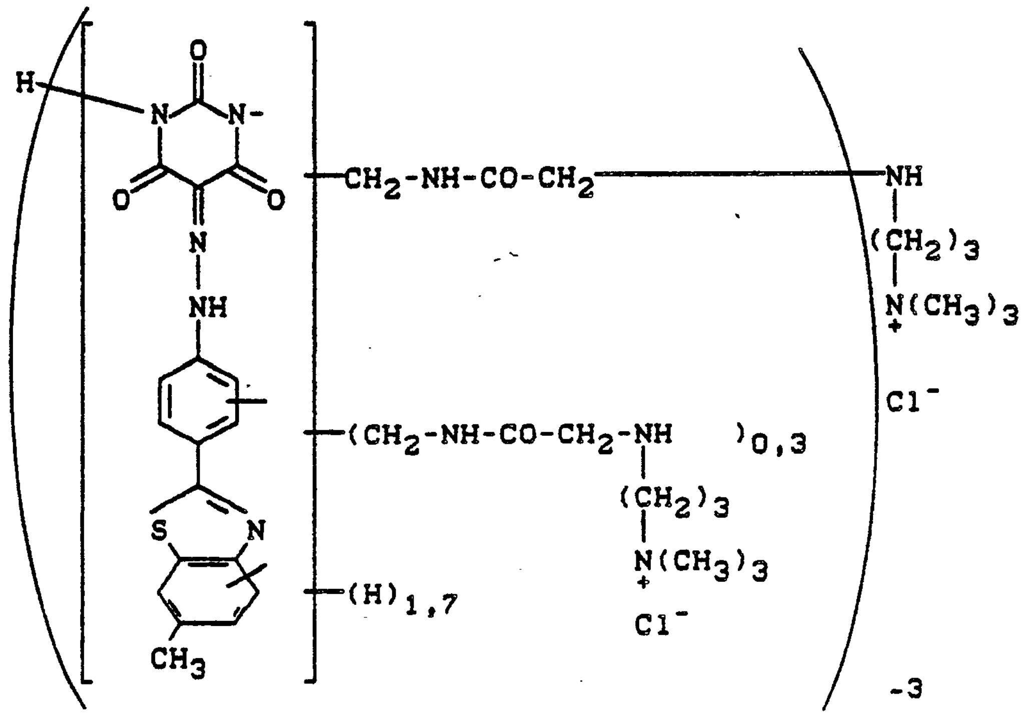

der Papier etwas rotstichig gelb färbt.

## Ansprüche

1. Basische Farbstoffe der Formel

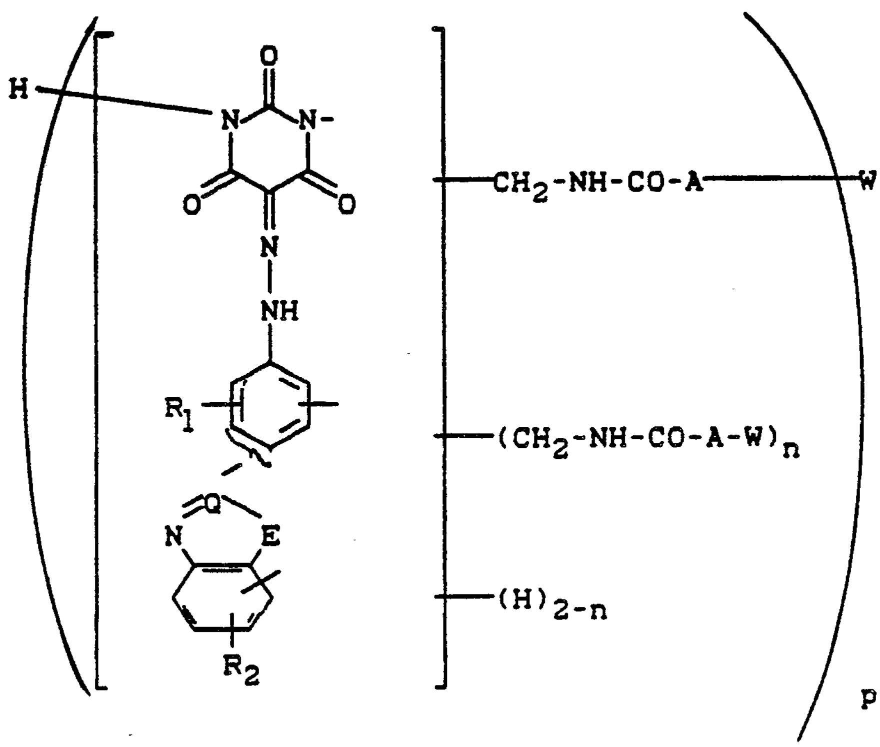

oder deren tautomere Formen, worin

$R_1$, $R_2$ für Wasserstoff, $C_1$-$C_4$-Alkyl, $C_1$-$C_4$-Alkoxy oder Halogen,
Q - E für C-S, C-O, C-NH, $\overset{\oplus}{N}$ - $\overset{\ominus}{N}$,
A für $C_1$-$C_4$-Alkylen,
W für den Rest eines aliphatischen Mono-, Di-, Tri-, Tetra-, Penta-, Hexa- oder Heptamins, der protoniert oder quaterniert sein kann,
n für 0 bis 1,5 und
p für 1,3 bis 10 stehen.

2. Farbstoffe gemäß Anspruch 1, dadurch gekennzeichnet, daß
W für den Rest

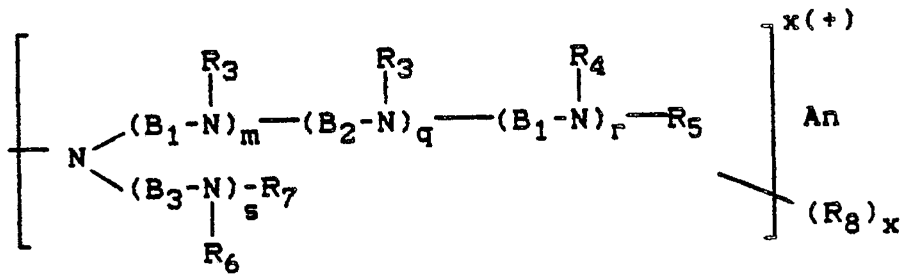

steht, worin
m 0, 1, 2 oder 3,
q,r 0 oder 1,
s 0, 1 oder 2,
x 0, 1, 2 oder 3,
$B_1$, $B_2$ $C_2$- oder $C_3$-Alkylen,
$B_3$ $C_2$-$C_6$-Alkylen oder $C_4$-$C_{10}$-Alkylen, das durch 1 bis 3 Sauerstoffe unterbrochen ist, und
$R_3$ bis $R_7$ Wasserstoff, $C_1$-$C_4$-Alkyl, durch OH oder $C_1$-$C_4$-Alkoxy substituiertes $C_2$-$C_4$-Alkyl bedeuten, oder
$R_4$ und $R_5$ oder - wenn m + q + r + s = 0 -
$R_5$ und $R_7$ zu einem 5- oder 6-gliedrigen Ring geschlossen sind,
$R_8$ Methyl, Ethyl, Hydroxyethyl oder Hydroxypropyl und
An die Ladung x (+) kompensierende Äquivalente eines Anions bedeuten.

3. Farbstoffe gemäß Anspruch 1 der Formel

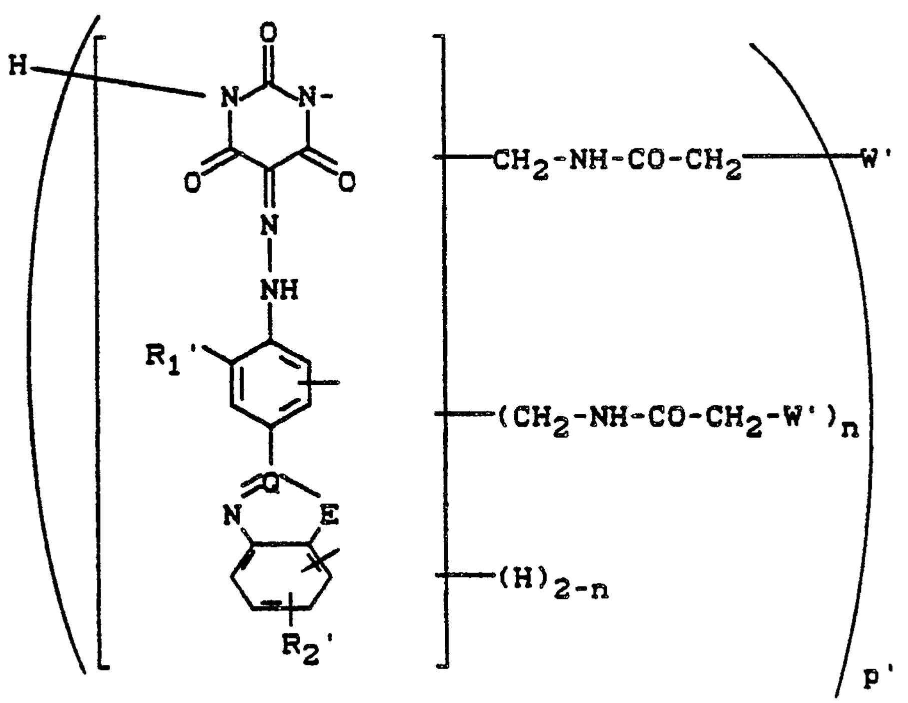

oder deren tautomere Formen, worin

$R_1'$ für Wasserstoff, Methoxy, Ethoxy oder Chlor,

$R_2'$ für Wasserstoff, Methyl, Ethyl, Methoxy oder Ethoxy,

$p'$ für 1,5 bis 6,

$W'$ für

1. 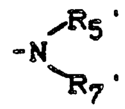

mit

$R_5'$ Methyl, Ethyl, n-Propyl oder $-CH_2-CH_2-OH$,

$R_7'$ Wasserstoff, Methyl, Ethyl, n-Propyl oder $-CH_2-CH_2-OH$,

2. 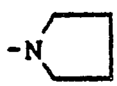, 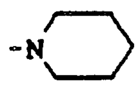, 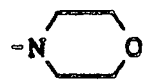, 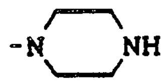,

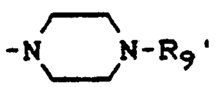 oder 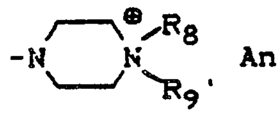

mit

$R_9'$ Methyl, Ethyl, $-CH_2-CH_2-OH$ oder $-CH_2-CH_2-NH_2$,

3. $-NH-B_3'-NH_2$

mit

$B_3'$ Ethylen, Propylen, Trimethylen, Hexamethylen oder $-(CH_2)_3-O-CH_2-CH_2-O-(CH_2)_3-$

4. 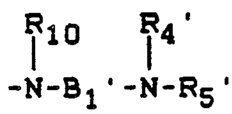

mit

$B_1'$ Ethylen oder Trimethylen,

$R_4'$ Wasserstoff, Methyl, Ethyl, n-Propyl oder $-CH_2-CH_2-OH$ oder

$NR_4'R_5'$ steht für einen der folgenden Ringe:

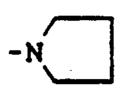, 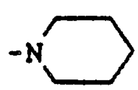, 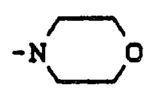, 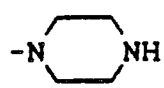,

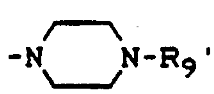 oder 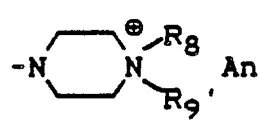

$R_{10}$ Wasserstoff, Methyl oder Ethyl

5. 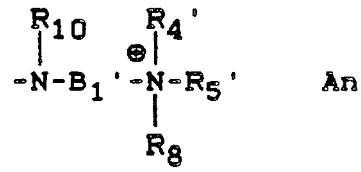

6. 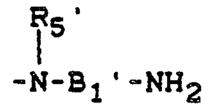

7. 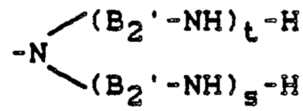

mit
$t = 1, 2, 3, 4$ oder 5
$s + t = 2, 3, 4$ oder 5
$B_2'$ = Ethylen, Propylen, Trimethylen

8. 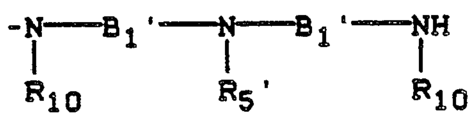

9. 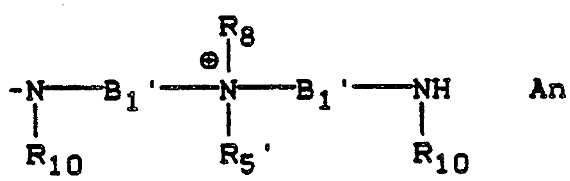

10. 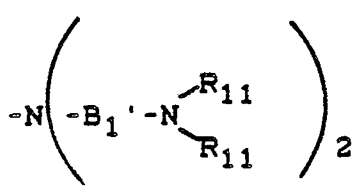

mit
$R_{11}$ = Methyl oder Ethyl

11. 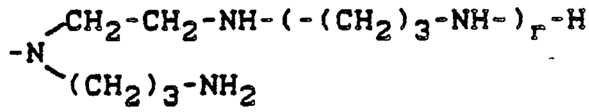

12. 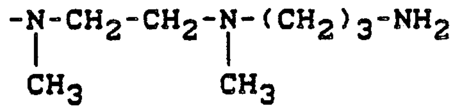

13. 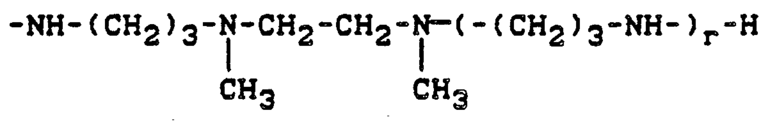

stehen, und Q-E und n die in Anspruch 1 genannte Bedeutung haben.

4. Farbstoffe gemäß Anspruch 1 der Formel

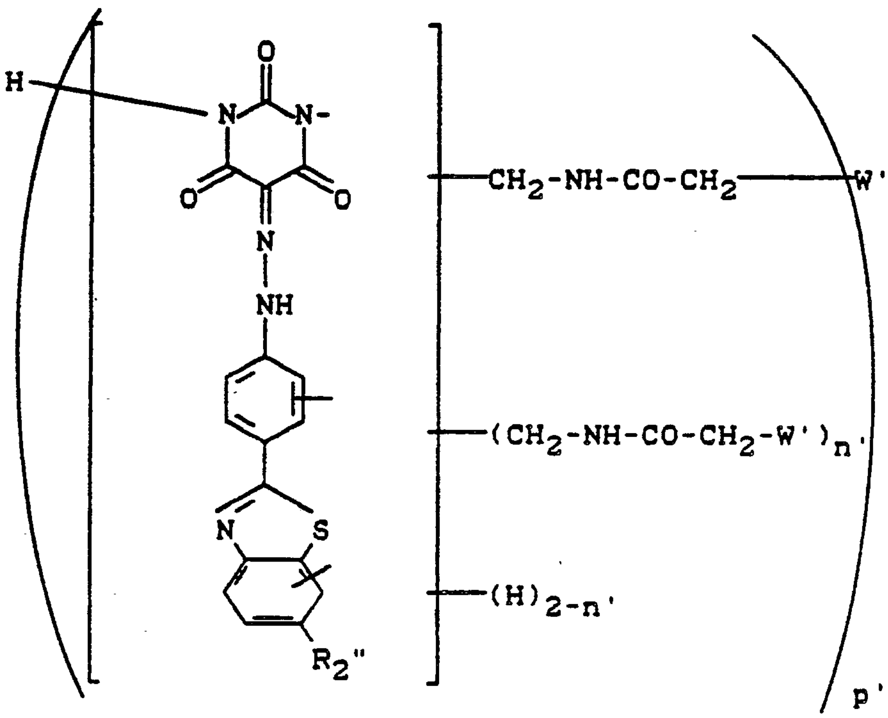

oder deren tautomere Formen, worin

$R_2''$ für Wasserstoff oder Methyl,

$n'$ für 0,2 bis 1,2 stehen und

$W'$ und $p'$ die in Anspruch 2 genannte Bedeutung haben.

5. Farbstoffe gemäß Anspruch 1 der Formel

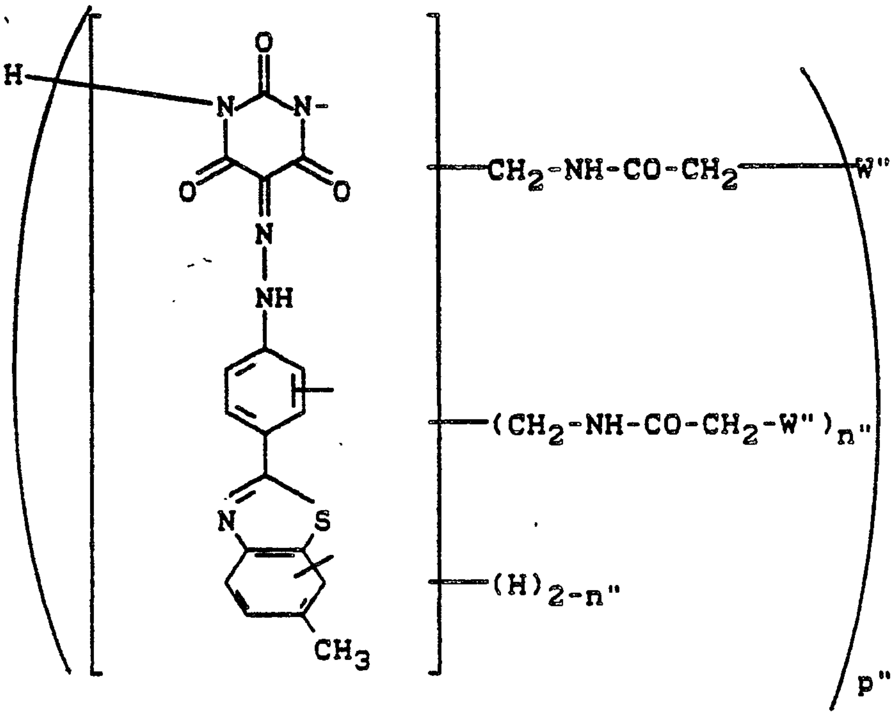

oder deren tautomere Formen, worin

W″ für die folgenden Reste

$-NH-(CH_2)_3-NH-CH_3$, $-NH-(CH_2)_3-NH-C_2H_5$,

$-NH-(CH_2)_3-N(CH_3)_2$, $-NH-(CH_2)_3-N(C_2H_5)_2$,

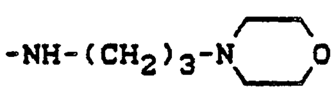 , 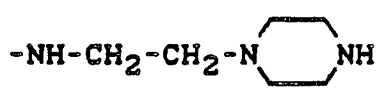 ,

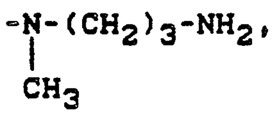 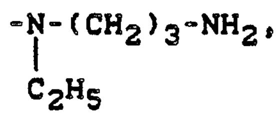

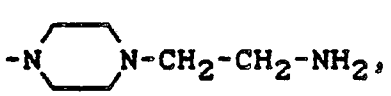 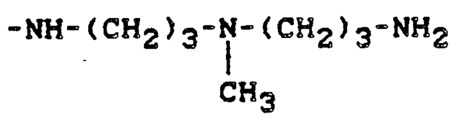

oder 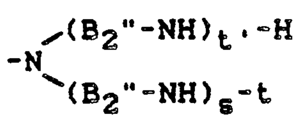

steht mit

$B_2''$ Ethylen oder Propylen,

$t'$ 2, 3 oder 4 und

$s + t'$ 3 oder 4 und

$n''$ für 0,4 bis 0,9 und

$p''$ für 2 bis 5 stehen.

6. Verfahren zur Herstellung von Farbstoffen des Anspruchs 1, dadurch gekennzeichnet, daß man eine Verbindung der Formel

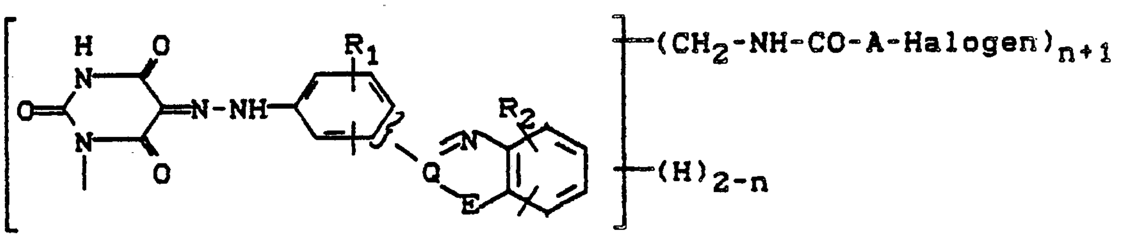

mit einem Amin der Formel

HW

oder mit Mischungen von Aminen dieser Formel in wäßrig-alkalischem Medium zur Reaktion bringt.

7. Verfahren nach Anspruch 6 zur Herstellung von Farbstoffen des Anspruchs 4, dadurch gekennzeichnet, daß man eine Verbindung der Formel

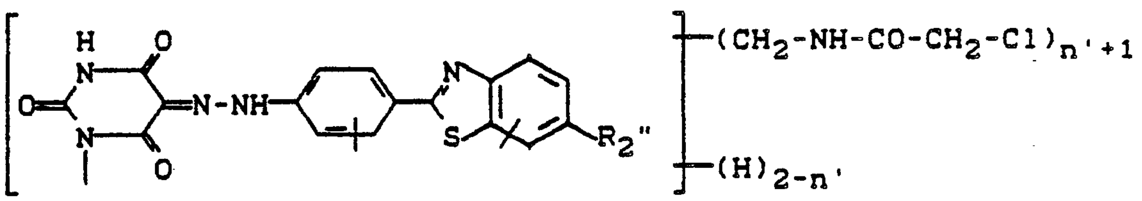

mit einem Amin der Formel

HW′

oder mit Mischungen von Aminen dieser Formel in Wasser bei pH 9-12 und einer Temperatur von 20 bis 100 °C zur Reaktion bringt.

8. Verfahren zur Herstellung von Verbindungen der Formel

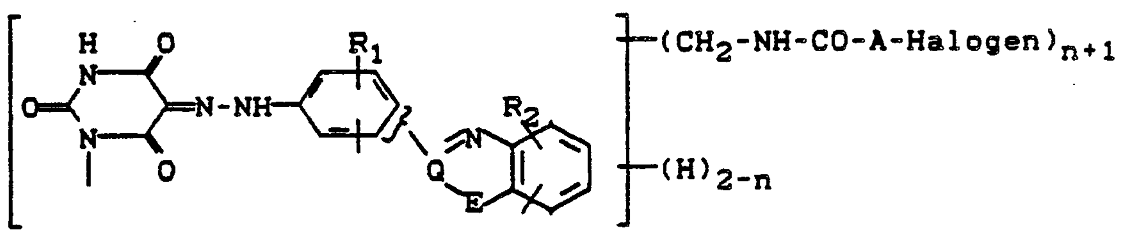

dadurch gekennzeichnet, daß man eine Verbindung der Formel

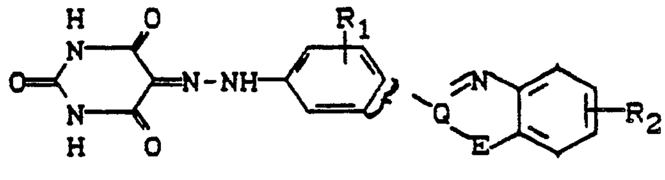

in hochprozentiger Schwefel- oder Phosphorsäure oder in Polyphosphorsäure, gegebenenfalls unter Zusatz

wasserabspaltender Mittel wie Schwefeltrioxid (Oleum), Phosphorpentoxid, Acetanhydrid, Benzol- oder Toluolsulfonsäure, mit Paraformaldehyd und einem Amid der Formel
$H_2N$-CO-Alkylen-Halogen (X)
bei 0 bis 140 °C umsetzt.

9. Verfahren nach Anspruch 8 zur Herstellung von Verbindungen der Formel

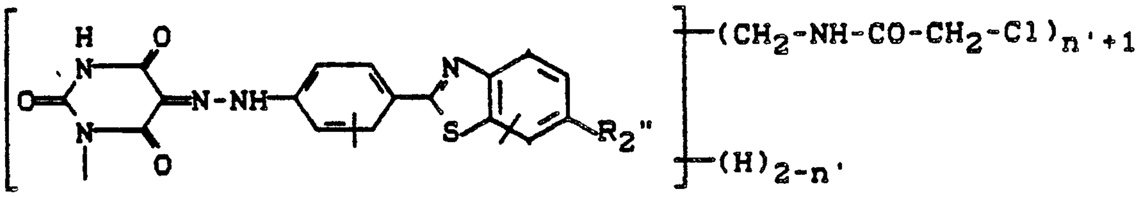

dadurch gekennzeichnet, daß man Paraformaldehyd und 2-Chloracetamid in 98 bis 100 %iger Schwefelsäure oder bis zu 3 %igem Oleum bei 15-40 °C zur Reaktion bringt, einen Chromophor der Formel

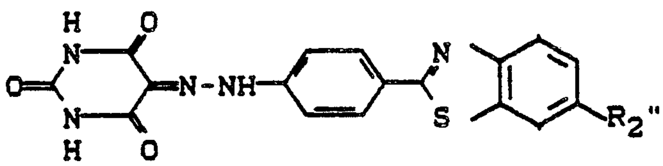

in die entstandene Lösung einträgt und die weitere Umsetzung bei 0 bis 80 °C durchführt.

10. Verwendung der Farbstoffe des Anspruchs 1 zum Färben von mit basischen Farbstoffen färbbaren Materialien, insbesondere Papier.